# EUROPÄISCHE PATENTSCHRIFT

(11) **EP 3 259 999 B1**
(45) Veröffentlichungstag und Bekanntmachung des Hinweises auf die Patenterteilung: **19.08.2020**
(21) Anmeldenummer: 17181352.0
(22) Anmeldetag: 02.04.2012
(51) Int. Cl.: A24C 5/32, A24C 5/47, B65G 47/84

(54) **FÖRDERUNG VON STABFÖRMIGEN ARTIKELN DER TABAK VERARBEITENDEN INDUSTRIE**
TRANSPORT OF ROD-SHAPED ARTICLES FROM THE TOBACCO PROCESSING INDUSTRY
ACHEMINEMENT D'ARTICLES EN FORME DE TIGE DE L'INDUSTRIE DE TRAITEMENT DU TABAC

(30) Priorität: 14.04.2011 DE 102011007428
(43) Veröffentlichungstag der Anmeldung: 27.12.2017
(62) Teilanmeldung aus: 12715582.8
(73) Patentinhaber: Hauni Maschinenbau GmbH, 21033 Hamburg (DE)
(72) Erfinder: KALUS, Peter, 21039 Escheburg (DE); ROTTMANN, Franz, 21509 Glinde (DE); SCHLISIO, Siegfried, 21502 Geesthacht (DE); FOLGER, Manfred, 21035 Hamburg (DE); PLÄHN, Dieter, Verstorben (DE); KLEINE WÄCHTER, Michael, 23881 Lankau (DE); PAWELKO, Karl-Heinz, 21436 Marschacht (DE); STÜBER, Reinhard, 21465 Reinbek (DE)
(74) Vertreter: Seemann & Partner Patentanwälte mbB

(56) Entgegenhaltungen:
- EP-A1- 1 702 523
- WO-A1-2010/012420
- DE-A1- 3 623 129

## Beschreibung

Die Erfindung betrifft ein Verfahren zum Fördern von stabförmigen Artikeln, insbesondere Filterzigaretten oder deren stabförmige Komponenten, wobei die stabförmigen Artikel in Aufnahmemulden von Fördertrommeln unter Rotation der Fördertrommeln queraxial gefördert werden.

Ferner betrifft die Erfindung eine Anordnung zum Fördern von stabförmigen Artikeln, insbesondere Filterzigaretten oder deren Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie.

Außerdem betrifft die Erfindung eine Maschine der Tabak verarbeitenden Industrie, insbesondere Filteransetzmaschine, zur Herstellung von stabförmigen Artikeln der Tabak verarbeitenden Industrie, insbesondere Filterzigaretten.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von den Zigaretten und Filterstäben werden im Sinne der Erfindung auch Abschnitte von Papier und dergleichen aus flächigem und/oder bahnförmigem Material verstanden, z.B. Abschnitte und/oder Bahnen von Zigarettenpapier, Filterpapier oder Belagpapier zum Verbinden von Tabakstücken mit Filterstopfen.

Das Fördern der vorgenannten Gegenstände während der Herstellung von Zigaretten, Filtern sowie Filterzigaretten wird bei modernen Produktionsmaschinen der Tabak verarbeitenden Industrie im Allgemeinen mittels Fördertrommeln durchgeführt, deren Mantelfläche zum Fördern von stabförmigen Gegenständen als stabförmige Komponenten (Zigaretten, Filterstäben oder Filterstopfen, Filterzigaretten) mit Mulden zum Aufnehmen der Gegenstände versehen sind. Zum Fördern von blattförmigen und/oder bahnförmigen Gegenständen (Belagpapierabschnitte und/oder -bahnen) sind Fördertrommeln vorgesehen, deren Mantelflächen im Wesentlichen glatt ist.

Während der Förderung werden diese Gegenstände der Tabak verarbeitenden Industrie von Saugluft auf den Fördertrommeln gehalten, die an entsprechenden Kanälen, meist Bohrungen, anliegt. Diese Kanäle sind im Allgemeinen in Reihen angeordnet, deren Längen den Abmessungen der zu transportierenden Gegenstände quer zur Transportrichtung entsprechen.

In Filteransetzmaschinen werden auf den Fördertrommeln stabförmige Artikel, wie z.B. Tabakstöcke oder Filterstopfen bzw. Filterstämige Artikel, wie z.B. Tabakstöcke oder Filterstopfen bzw. Filterstäbe, queraxial in Aufnahmemulden der Fördertrommel gefördert. Hierbei sind die Aufnahmemulden in vorbestimmten Teilungsabständen auf der Umfangsfläche der Fördertrommel angeordnet.

Unter Teilungsabstand wird der queraxiale Abstand der Aufnahmemulden verstanden. Der Abstand wird dabei vom Muldenmittelpunkt der Aufnahmemulde zum darauffolgenden Muldenmittelpunkt der benachbarten Aufnahmemulde des auf der Oberfläche die stabförmigen Rauchartikel(gruppen) transportierenden Muldenförderers oder von Muldengrund zu Muldengrund bei z.B. einer prismenförmigen Aufnahmemulde gemessen. Der Teilungsabstand bei einem Trommelförderer, auch als Fördertrommel bezeichnet, ist der queraxiale Abstand bzw. die Länge des (Kreis-)Bogens zwischen (benachbarten) Muldenmittelpunkten auf der Kreislinie, auf der die Muldenmittelpunkte bzw. Muldenmittelpunktsachsen der Mulden angeordnet sind.

In WO 2010/012420 A1 ist eine Fördertrommel der Tabak verarbeitenden Industrie offenbart, wobei zwei verschiedene Arten von Aufnahmemulden für die stabförmigen Artikel vorgesehen sind. Hierbei ist jede Art von Aufnahmemulden an wenigstens einen vorbestimmten geometrischen Parameter, insbesondere Durchmesser, der zu fördernden stabförmigen Artikel angepasst, so dass auf der Fördertrommel zwei verschiedene Artikel jeweils mit unterschiedlichen geometrischen Parametern förderbar sind.

Ferner offenbart EP 1 702 523 A1 ein Verfahren zur Herstellung von Filterzigaretten, wobei vor Einbringen eines Filterstopfens zwischen längsaxial beabstandeten Tabakstockpaaren die Tabakstöcke mit einem queraxialen Abstand gefördert werden, der geringer ist als die Länge des nachfolgend angehefteten Verbindungsblättchens.

Nachdem ein Filterstopfen zwischen die Tabakstockpaare eingelegt wurde, werden die gebildeten Rauchartikelgruppen als Artikel einer ersten Gruppe und einer zweiten Gruppe jeweils einer Belageinrichtung zugeführt, so dass der gebildete Artikelstrom in zwei Artikelströme aufgeteilt wird. Hierbei wird der queraxiale Abstand zwischen den Rauchartikelgruppen jeder Gruppe vergrößert.

Darüber hinaus offenbart DE 36 23 129 A1 eine Maschine zum Anbringen von Filtern.

Ausgehend von diesem Stand der Technik besteht die Aufgabe der vorliegenden Erfindung darin, die Förderung von stabförmigen Artikeln an einer Maschine der Tabak verarbeitenden Industrie, beispielsweise einer Filteransetzmaschine, für einen schnellen Durchmesserformatwechsel auf einfache Weise zu ermöglichen, wobei der konstruktive Aufwand möglichst gering gehalten werden soll.

Gelöst wird diese Aufgabe durch ein Verfahren zum Fördern von stabförmigen Artikeln der Tabak verarbeitenden Industrie, insbesondere Filterzigaretten oder deren stabförmige Komponenten, wobei die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten stabförmigen Artikel von einer Fördertrommel an eine nachfolgende Fördertrommel übergeben werden, wobei das Verfahren dadurch weitergebildet wird, dass bei einem Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, der Teilungsabstand der Aufnahmemulden wenigstens einer Fördertrommel in Abhängigkeit der zu fördernden stabförmigen Artikeln derart geändert wird, dass der Abstand mindestens einer Anlagefläche der Aufnahmemulden der Fördertrommel zur Rotationsachse der Fördertrommeln für die stabförmigen Artikel der ersten Art und der Abstand derselben Anlagefläche derselben Aufnahmemulden der Fördertrommel zur Rotationsachse der Fördertrommeln für die Artikel der zweiten Art unterschiedlich sind, wobei die Position der Aufnahmemulden der Fördertrommeln durch Verschiebung der Aufnahmemulden in radialer Richtung bezogen auf die Rotationsachse der Fördertrommeln verändert wird.

Die Erfindung beruht auf dem Gedanken, dass bei einer Maschine der Tabak verarbeitenden Industrie, bei der die stabförmigen Artikel unter Verwendung von Fördertrommeln queraxial gefördert werden, ohne Austausch von Fördertrommeln und ohne Änderung der Position der Trommeln an der Filteransetzmaschine die Fördertrommeln derart eingestellt werden, dass unabhängig vom Durchmesser der geförderten oder zu fördernden stabförmigen Artikel die Mittenlängsachsen der geförderten stabförmigen Artikel stets auf demselben Kreisbogen der Mittenlängsachsen der Artikel gefördert werden, wobei der Radius des Kreisbogens für die Mittenlängsachsen der zu fördernden stabförmigen Artikel an der jeweiligen Fördertrommel konstant gehalten wird oder ist.

Durch die Änderung des Teilungsabstands der Muldenmittenachsen der Aufnahmemulden, der in Abhängigkeit des Durchmessers der zu fördernden oder geförderten stabförmigen Artikel bei einem Produkt- oder einem Formatwechsel verändert wird, wird erreicht, dass die Kreisbögen der Mittenlängsachsen der stabförmigen Artikel der ersten Art und der Mittenlängsachsen der stabförmigen Artikel der zweiten Art denselben, annähernd konstanten Radius aufweisen. Dadurch wird ein schneller Produktwechsel sowie Formatwechsel an beispielsweise einer Filteransetzmaschine ermöglicht, da zum Beispiel bei einem schnellen Wechsel der Herstellung von Filterzigaretten mit einem Durchmesser von beispielsweise 8 mm (als stabförmige Artikel einer ersten Art) zu herzustellenden Filterzigaretten mit einem Durchmesser von 5 mm (als Artikel einer zweiten Art) durch die Anpassung des Teilungsabstandes der Aufnahmemulden der Fördertrommel(n) die stabförmigen Artikel ohne starke mechanische Beeinträchtigung von Fördertrommel zu Fördertrommel nach einem Formatwechsel gefördert werden. Hierbei wird die mechanische Belastung der empfindlichen geförderten Artikel im Übergabebereich oder im Übergabepunkt zwischen zwei Fördertrommeln herabgesetzt oder minimiert, wodurch die zu fördernden stabförmigen Artikel schonend von Fördertrommeln zur nachfolgenden Fördertrommel übergeben werden.

Nach Beendigung des Herstellungsprozesses mit stabförmigen Artikeln einer ersten Art werden für die Förderung der Artikel der zweiten Art die Teilungsabstände der Aufnahmemulden an wenigstens einer Fördertrommel verändert sowie angepasst.

Unter stabförmigen Artikeln der Tabak verarbeitenden Industrie im Rahmen der Erfindung werden stabförmige Gegenstände wie z.B. Zigaretten, Filterstäbe oder Filterstopfen oder deren (stabförmige) Komponenten verstanden.

Unter dem Begriff "stabförmige Artikel einer ersten Art" wird eine bestimmte Sorte an zu fördernden stabförmigen Artikeln der Tabak verarbeitenden Industrie verstanden, die einen vorbestimmten Durchmesser aufweisen und beispielsweise an einer Filteransetzmaschine queraxial gefördert werden. Unter dem Begriff "stabförmige Artikel einer zweiten Art" wird eine bestimmte Sorte an zu fördernden stabförmigen Artikeln der Tabak verarbeitenden Industrie verstanden, die einen vorbestimmten Durchmesser aufweisen und z.B. queraxial an einer Filteransetzmaschine gefördert werden und sich im Durchmesser von den stabförmigen Artikeln der ersten Art unterscheiden.

Bei einem Produktions- oder Formatwechsel an einer Filteransetzmaschine von zu fördernden oder geförderten stabförmigen Artikeln einer ersten Art zu stabförmigen Artikeln einer zweiten Art bestehen daher Unterschiede im Durchmesser der zu fördernden stabförmigen Artikel.

Ein Vorteil der Erfindung besteht darin, dass mehrere stabförmige Artikel unterschiedlichen Durchmessers an einer Filteransetzmaschine ohne Austausch aller Fördertrommeln gefördert und produziert werden, wodurch Umbaumaßnahmen bei einem Wechsel von zu fördernden stabförmigen Artikeln einer ersten Art zu stabförmigen Artikeln einer zweiten Art erheblich reduziert werden, da ein aufwändiger Wechsel aller Förderorgane vermieden bzw. nicht ausgeführt wird. Um eine Förderung von stabförmigen Artikeln unterschiedlichen Durchmessers zu gewährleisten, wird der Teilungsabstand der Aufnahmemulden der Fördertrommeln verändert bzw. angepasst.

Somit wird durch das erfindungsgemäße Verfahren erreicht, dass beispielsweise an einer Filteransetzmaschine zwei unterschiedliche Zigarettenformate nacheinander verarbeitet oder hergestellt werden.

Als mindestens eine Anlagefläche einer Aufnahmemulde wird eine Fläche einer Aufnahmemulde verstanden, an der die zu fördernden stabförmigen Artikel (der ersten Art und der zweiten Art) bei Förderung auf der Fördertrommel anliegen, wodurch die Anlagefläche jeweils in berührenden Kontakt mit den aufgenommenen stabförmigen Artikeln ist. Bei Förderung von stabförmigen Artikeln einer ersten Art unterscheidet sich der Abstand der jeweiligen Anlagefläche der Aufnahmemulden der Fördertrommel zur Rotationsachse der Fördertrommeln bei Aufnahme von stabförmigen Artikeln der ersten Art vom Abstand derselben Anlageflächen derselben Aufnahmemulde der Fördertrommel zur Rotationsachse der Fördertrommeln bei Aufnahme von Artikeln der zweiten Art. Gemäß der Erfindung werden die nicht-tauschbaren Aufnahmemulden der Fördertrommel für die Förderung der stabförmigen Artikel der ersten Art und für die Förderung der stabförmigen Artikel der zweiten Art beibehalten, so dass es sich bei den Aufnahmemulden um nicht-austauschbare, nicht geänderte Aufnahmemulden handelt, wodurch die stabförmigen Artikel der ersten Art und die stabförmigen Artikel der zweiten Art in oder auf denselben Aufnahmemulden der Fördertrommel mit und im Kontakt mit denselben beibehaltenen Anlageflächen gefördert werden.

Ferner ist in einer Ausgestaltung des Verfahrens vorgesehen, dass der Teilungsabstand der Aufnahmemulden wenigstens einer Fördertrommel, insbesondere der Teilungsabstand von benachbarten Aufnahmemulden, durch die Variation der Form der Aufnahmemulden und/oder durch die Variation der Position der Aufnahmemulden an der Außenseite der Fördertrommel geändert wird, wodurch die Kreisbögen der Mittenlängsachsen der zu fördernden stabförmigen Artikel, unabhängig von deren Durchmesser, einen konstanten vorbestimmten Radius aufweisen. Hierdurch ergeben sich für unterschiedliche Artikel mit verschiedenen Durchmessern jeweils verschiedene Geometrien oder Positionen zur Rotationsachse der Fördertrommel der Aufnahmemulden.

Überdies zeichnet sich eine Weiterbildung des Verfahrens dadurch aus, dass bei zwei in Förderrichtung der stabförmigen Artikel benachbarten Fördertrommeln für die Förderung von stabförmigen Artikeln im Übergabebereich der stabförmigen Artikel von der einen Fördertrommel auf die nachfolgende Fördertrommel der Kreisbogen der Mittenlängsachsen der stabförmigen Artikel, die auf der Artikel abgebenden Fördertrommel gefördert werden, und der Kreisbogen der Mittenlängsachsen der stabförmigen Artikel, die auf der Artikel aufnehmenden Fördertrommel gefördert werden, sich berühren.

Des Weiteren ist es in einer Ausgestaltung des Verfahrens vorgesehen, dass bei zwei in Förderrichtung der stabförmigen Artikel benachbarten Fördertrommeln für die Förderung von stabförmigen Artikeln der ersten Art die Form und/oder die Position der Aufnahmemulden beider Fördertrommeln derart eingestellt wird, dass im Übergabebereich der stabförmigen Artikel von der einen Fördertrommel, die im Übergabebereich die stabförmigen Artikel abgibt, auf die nachfolgende Fördertrommel der Kreisbogen der Mittenlängsachsen der stabförmigen Artikel der ersten Art, die auf der Artikel abgebenden Fördertrommel gefördert werden, und der Kreisbogen der Mittenlängsachsen der stabförmigen Artikel der ersten Art, die auf der Artikel aufnehmenden Fördertrommel gefördert werden, sich berühren und nach einem Wechsel der zu fördernden stabförmigen Artikel mit einem anderen Durchmesser für die Förderung der stabförmigen Artikel der zweiten Art die Form und/oder die Position der Aufnahmemulden beider Fördertrommeln derart eingestellt sind, dass im Übergabebereich der stabförmigen Artikel von der einen Fördertrommel auf die nachfolgende Fördertrommel der Kreisbogen der Mittenlängsachsen der stabförmigen Artikel der zweiten Art, die auf der Artikel abgebenden Fördertrommel gefördert werden, und der Kreisbogen der Mittenlängsachsen der stabförmigen Artikel der zweiten Art, die auf der Artikel aufnehmenden Fördertrommel gefördert werden, sich berühren.

Bevorzugterweise entspricht bei Aufnahme von stabförmigen Artikeln der ersten Art in den Aufnahmemulden der wenigstens einen Fördertrommel der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art in den Aufnahmemulden der wenigstens einen Fördertrommel.

Außerdem ist es bevorzugt, dass die Positionen der Rotationsachsen der Fördertrommeln bei Förderung der stabförmigen Artikel der ersten Art und bei Förderung der stabförmigen Artikel der zweiten Art unverändert bleiben. Die relative Anordnung der Fördertrommeln wird dadurch beibehalten.

Des Weiteren ist es für die Durchführung eines schnellen Produktionswechsels an einer Filteransetzmaschine vorteilhaft, dass die Form der Aufnahmemulden der Fördertrommeln durch Variation des in queraxialer Richtung ausgebildeten Abstandes zwischen wenigstens zwei einander gegenüberliegenden Anlageflächen der Aufnahmemulden für die aufzunehmenden stabförmigen Artikel verändert wird. Insbesondere wird die Form im Querschnitt der Aufnahmemulden variiert, wodurch der Teilungsabstand von benachbarten Aufnahmemulden verändert wird.

Dadurch, dass die Position der Aufnahmemulden der Fördertrommeln durch Verschiebung der Aufnahmemulden in radialer Richtung bezogen auf die Rotationsachse der Fördertrommeln verändert wird, ist die Variation der Position in radialer Richtung vorgesehen, so dass der Teilungsabstand zwischen den Muldenmittelpunkten bzw. Muldengeometrien von zwei benachbarten Aufnahmemulden einer Fördertrommel verändert wird.

Vorzugsweise werden die für die Förderung der stabförmigen Artikel vorgesehenen Fördertrommeln beibehalten.

Außerdem wird die Aufgabe gelöst durch eine Anordnung zum Fördern von stabförmigen Artikeln der Tabak verarbeitenden Industrie, insbesondere Filterzigaretten oder deren stabförmige Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie, wobei die Fördertrommeln in queraxialer Förderrichtung der stabförmigen Artikel hintereinander angeordnet sind, wobei die Fördertrommeln zur Aufnahme von stabförmigen Artikeln jeweils mit Aufnahmemulden mit einer Muldenkontur ausgebildet sind, wobei die Anordnung dadurch weitergebildet wird, dass für einen Wechsel der zu fördernden stabförmigen Artikel von stabförmigen Artikeln einer ersten Art mit einem vorbestimmten Durchmesser zu stabförmigen Artikeln einer zweiten Art mit einem vorbestimmten Durchmesser, wobei der Durchmesser der Artikel der ersten Art und der Durchmesser der Artikel der zweiten Art sich voneinander unterscheiden, der Teilungsabstand der Aufnahmemulden wenigstens einer Fördertrommel in Abhängigkeit der zu fördernden stabförmigen Artikel veränderbar ist, so dass der Abstand mindestens einer Anlagefläche der Aufnahmemulden der Fördertrommel zur Rotationsachse der Fördertrommeln für die stabförmigen Artikel der ersten Art und der Abstand derselben Anlagefläche derselben Aufnahmemulden der Fördertrommel zur Rotationsachse der Fördertrommeln für die Artikel der zweiten Art unterschiedlich sind, wobei die Aufnahmemulden der wenigstens einen Fördertrommel in radialer Richtung bewegbar ausgebildet sind. Hierbei entspricht bei Aufnahme von stabförmigen Artikeln der ersten Art in den Aufnahmemulden der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art.

Beispielsweise weisen Aufnahmemulden einer Fördertrommel bei teilkreisförmigen und U-förmigen Mulden eine Muldenmittenlängsachse auf, so dass gemäß der Erfindung der Kreisbogen der Muldenmittenachsen der Aufnahmemulden für die stabförmigen Artikel der ersten Art und der Kreisbogen der Muldenmittenachsen der Aufnahmemulden für die Artikel der zweiten Art unterschiedlich sind.

Die erfindungsgemäße Förderanordnung oder Fördereinrichtung zum Fördern der stabförmigen Artikel weist mehrere hintereinander angeordnete Fördertrommeln auf, so dass die queraxial hintereinander in einer oder mehreren Reihen angeordneten stabförmigen Artikel queraxial gefördert werden. Insbesondere ist die Anordnung Teil einer Maschine der Tabak verarbeitenden Industrie, insbesondere einer Filteransetzmaschine.

Hierzu ist in einer Weiterbildung der Anordnung vorgesehen, dass die Aufnahmemulden der wenigstens einen Fördertrommel jeweils für die Aufnahme von stabförmigen Artikeln wenigstens eine bewegbare Muldenanlagefläche aufweisen, so dass durch die Bewegung der wenigstens einen Muldenanlagefläche der Teilungsabstand der Aufnahmemulden der Fördertrommel durch die Variation der Form der Aufnahmemulden und/oder durch die Variation der Position der Aufnahmemulden an der Außenseite der Fördertrommel verändert ist.

Insbesondere weist die Anordnung eine Fördertrommel zur queraxialen Förderung von stabförmigen Artikeln auf, wobei die Fördertrommel einen Trommelkörper aufweist. Der Trommelkörper ist dabei mit Aufnahmemulden für die stabförmigen Artikel in Umfangsrichtung des Trommelkörpers ausgebildet. Wenigstens eine Aufnahmemulde ist dabei unter Verwendung von wenigstens zwei parallel nebeneinander angeordneten Auflagestiften oder Stiften gebildet, wobei die Auflagestifte exzentrisch verschwenkbar am Trommelkörper gelagert oder angeordnet sind. Durch entsprechende Einstellmittel wird gewährleistet, dass die Auflagestifte, insbesondere gleichzeitig exzentrisch verschwenkt werden, um den Teilungsabstand zwischen den durch jeweils zwei Auflagestifte gebildeten Aufnahmemulden zu variieren oder in Abhängigkeit der Durchmesser der zu fördernden stabförmigen Artikel anzupassen.

Dazu ist bei der Fördertrommel weiterhin vorgesehen, dass jeweils zwei Auflagestifte parallel nebeneinander angeordnet sind, wobei die Auflagestifte voneinander beabstandet sind, um einen stabförmigen Artikel im als Aufnahmemulde ausgebildeten Zwischenraum zwischen den Auflagestiften aufzunehmen. Durch die voneinander queraxial beabstandeten Auflagestifte ist es möglich, im Zwischenraum zwischen den beiden Auflagestiften eine Aufnahmemulde auszubilden, in der die stabförmigen Artikel aufgenommen werden.

Durch die exzentrische Verschwenkbarkeit der Auflagestifte werden die Form der Aufnahmemulden und somit auch die Lage der Aufnahmemulden entsprechend verändert.

Außerdem ist es bei der Fördertrommel vorgesehen, dass der oder die im Zwischenraum zwischen zwei Auflagestiften aufgenommenen stabförmigen Artikel mit Unterdruck beaufschlagbar sind.

Darüber hinaus zeichnet sich eine Weiterbildung der für die (Förder-)Anordnung verwendeten Fördertrommel dadurch aus, dass die Auflagestifte im Querschnitt rund, insbesondere kreisrund, ausgebildet sind. Hierdurch ergibt sich bei Aufnahme von stabförmigen Artikeln ein näherungsweise linienförmiger Kontakt zwischen den zwei nebeneinander angeordneten Auflagestiften und den stabförmigen Artikeln.

Des Weiteren ist für die Ausgestaltung der Förderanordnung mit mehreren Fördertrommeln eine Fördertrommel vorgesehen, die einen Trommelkörper aufweist, wobei der Trommelkörper mit Aufnahmemulden für die stabförmigen Artikel in Umfangsrichtung des Trommelkörpers ausgebildet ist. Die Aufnahmemulden weisen dabei eine konstante, d.h. nicht veränderbare, Muldenkontur auf. Ferner sind die Aufnahmemulden auf Grundkörpern ausgebildet. Die Grundkörper sind gegenüber dem Trommelkörper der Fördertrommel in radialer Richtung verschiebbar, wobei unter Verwendung von entsprechenden Einstellmitteln der Teilungsabstand zwischen den Aufnahmemulden von zwei benachbarten Aufnahmemulden aufgrund der gleichzeitigen Bewegung der Aufnahmemulden in radialer Richtung verändert wird. Hierbei wird durch eine Hubbewegung der Grundkörper in radialer Richtung der Teilungsabstand entsprechend eingestellt.

Überdies ist bei einer Weiterbildung der Anordnung vorgesehen, dass die Aufnahmemulden der wenigstens einen Fördertrommel in radialer Richtung und/oder wenigstens eine Muldenanlagefläche bewegbar ausgebildet sind.

Insbesondere ist es bei einer Ausgestaltung der Anordnung vorteilhaft, dass wenigstens eine Aufnahmemulde der wenigstens einen Fördertrommel wenigstens einen Stiftkörper oder zwei voneinander beabstandete Stiftkörper aufweist, wobei insbesondere wenigstens ein Stiftkörper oder beide Stiftkörper als Auflagestifte exzentrisch gelagert sind und verdrehbar sind.

Dazu ist weiter vorgesehen, dass bei zwei in Förderrichtung der stabförmigen Artikel benachbarten Fördertrommeln für die Förderung von stabförmigen Artikeln im Übergabebereich der stabförmigen Artikel von der einen Fördertrommel auf die nachfolgende Fördertrommel der Kreisbogen der Mittenlängsachsen der stabförmigen Artikel, die auf der Artikel abgebenden Fördertrommel gefördert werden, und der Kreisbogen der Mittenlängsachsen der stabförmigen Artikel, die auf der Artikel aufnehmenden Fördertrommel gefördert werden, sich berühren.

Außerdem entspricht bei Aufnahme von stabförmigen Artikeln der ersten Art in den Aufnahmemulden der wenigstens einen Fördertrommel der Kreisbogen der Mittenlängsachsen der stabförmigen Artikel der ersten Art dem Kreisbogen der Mittenlängsachsen der stabförmigen Artikel der zweiten Art bei Aufnahme von stabförmigen Artikeln der zweiten Art in den Aufnahmemulden der wenigstens einen Fördertrommel.

Ferner ist bei einem Verfahren zum Fördern von stabförmigen Artikeln der Tabak verarbeitenden Industrie, insbesondere Filterzigaretten oder deren stabförmige Komponenten, vorgesehen, dass die stabförmigen Artikel in Aufnahmemulden von Fördertrommeln unter Rotation der Fördertrommeln queraxial gefördert werden, wobei die um jeweils eine eigene Rotationsachse rotierenden oder rotierbaren Fördertrommeln in queraxialer Förderrichtung der stabförmigen Artikel hintereinander angeordnet sind, wobei die in wenigstens einer Reihe queraxial hintereinander angeordneten Artikel auf einer ersten Fördertrommel in den Aufnahmemulden queraxial zu einem ersten Übergabebereich zwischen der ersten Fördertrommel und einer zweiten Fördertrommel gefördert und im ersten Übergabebereich an die zweite Fördertrommel übergeben werden, nachfolgend die stabförmigen Artikel auf der zweiten Fördertrommel zu einem zweiten Übergabebereich zwischen der zweiten Fördertrommel und einer dritten Fördertrommel gefördert und im zweiten Übergabebereich an die dritte Fördertrommel übergeben werden, wobei im Anschluss daran die stabförmigen Artikel auf der dritten Fördertrommel in den Aufnahmemulden queraxial weiter gefördert werden, wobei weiter vorgesehen ist, dass die stabförmigen Artikel an die Aufnahmemulden der zweiten Fördertrommel übergeben werden, wobei die Aufnahmemulden der zweiten Fördertrommel auf verschwenkbaren Ärmchen der zweiten Fördertrommel ausgebildet sind, wobei die Ärmchen während der Rotation der (zweiten) Fördertrommel bei einem Umlauf jeweils mittels einer Schwenkkulisse um ihre jeweiligen Schwenkachsen verschwenkt werden, wobei durch die Schwenkkulisse die Aufnahmemulden (der zweiten Fördertrommel) mindestens zwei identische, vorzugsweise elliptische, Bewegungsabschnitte einer ellipsoiden Bewegungsbahn während eines Umlaufs (der zweiten Fördertrommel) ausführen, wobei die Schwenkkulisse in Abhängigkeit des Durchmessers der mittels der zweiten Fördertrommel zu fördernden stabförmigen Artikel eingestellt wird oder ist.

Diese nicht erfindungsgemäße Ausgestaltung beruht hierbei auf dem Gedanken, dass eine schnelle Anpassung an den Durchmesser von zu fördernden stabförmigen Artikeln erreicht wird, wenn eine Fördertrommel mit an einem Trommelkörper angeordneten bewegbaren, insbesondere verschwenkbaren, Ärmchen verwendet wird, wobei die Verschwenkung der Ärmchen durch Verwendung einer als Kurvenscheibe vorgesehenen Schwenkkulisse für die Ärmchen erreicht wird, wobei durch Verdrehen der Schwenkkulisse bzw. durch eine entsprechende Einstellung der Schwenkkulisse in Abhängigkeit der zu fördernden stabförmigen Artikel die Ärmchen im ersten Übergabebereich so ausgerichtet sind, um eine schonende Übergabe zwischen der ersten und der zweiten Fördertrommel zu erreichen. Anschließend werden die auf den verschwenkbaren Ärmchen angeordneten stabförmigen Artikel entsprechend der Form der elliptischen Schwenkkulisse verschwenkt, wobei im zweiten Übergabebereich zwischen der zweiten Fördertrommel und der dritten Fördertrommel die Ärmchen im Übergabezeitpunkt so verschwenkt sind, dass eine sanfte Übergabe im zweiten Übergabebereich erreicht wird. Durch die Anpassung der Schwenkkulisse führen bei einem kompletten Umlauf der Fördertrommel die Ärmchen bzw. die Aufnahmemulden der Ärmchen eine elliptische und in sich geschlossene Schwenkbewegung auf. Hierbei liegen die Aufnahmemulden der Ärmchen auf einer elliptischen Bewegungsbahn.

Ohne Änderung der elliptischen Form der Schwenkkulisse wird bei einem Formatwechsel, beispielsweise von stabförmigen Artikeln mit einem Durchmesser von 8 mm zu stabförmigen Artikeln mit einem Durchmesser von 5 mm die Schwenkkulisse in ihrer relativen Ausrichtung bzw. Position zu den zu bewegenden Ärmchen eingestellt, so dass die elliptische Bahn der Muldenmittenachsen der Ärmchen um einen vorbestimmten Winkel verstellt ist, wobei die Form der elliptischen Bahn beibehalten wird.

Dazu ist in einer Ausgestaltung des Verfahrens weiterhin vorgesehen, dass die Artikel auf einer ersten Fördertrommel in den Aufnahmemulden mit einem konstanten Teilungsabstand queraxial zum ersten Übergabebereich gefördert werden, so dass die Mittenlängsachsen der stabförmigen Artikel entlang eines Kreisbogens mit einem vorbestimmten, insbesondere konstanten, Kreisbogenradius auf der ersten Fördertrommel gefördert werden, und/oder dass die stabförmigen Artikel auf der dritten Fördertrommel in den Aufnahmemulden mit einem konstanten Teilungsabstand queraxial weiter gefördert werden, so dass die Mittenlängsachsen der stabförmigen Artikel entlang eines Kreisbogens mit einem vorbestimmten, insbesondere konstanten, Kreisbogenradius auf der dritten Fördertrommel gefördert werden. Hierdurch ist zwischen der ersten und der dritten Fördertrommel, die beide unbewegliche Aufnahmemulden mit jeweils einem konstanten Muldendurchmesser oder einer konstanten Muldenkontur aufweisen, die zweite Fördertrommel mit den verschwenkbaren Ärmchen angeordnet.

Gemäß einer bevorzugten Ausgestaltung ist außerdem vorgesehen, dass die Aufnahmemulden der zweiten Fördertrommel im ersten Übergabebereich und im zweiten Übergabebereich einen Abschnitt einer ellipsenbogenförmigen Bewegungsbahn ausführen.

Außerdem ist es bei einer Ausgestaltung des Verfahrens günstig, dass die bei Förderung von stabförmigen Artikeln einer ersten Art die in den Aufnahmemulden der zweiten Fördertrommel angeordneten stabförmigen Artikel mit ihren Mittenlängsachsen auf einer ersten Ellipsenbogenbahn zwischen dem ersten Übergabebereich und dem zweiten Übergabebereich gefördert werden und nach einem Wechsel bei Förderung von stabförmigen Artikeln einer zweiten Art mit einem Durchmesser, der sich vom Durchmesser der Artikel der ersten Art unterscheidet, die in den Aufnahmemulden der zweiten Fördertrommel angeordneten stabförmigen Artikel der zweiten Art mit ihren Mittenlängsachsen auf einer zweiten Ellipsenbogenbahn zwischen dem ersten Übergabebereich und dem zweiten Übergabebereich gefördert werden, wobei für den Wechsel der zu fördernden stabförmigen Artikeln die (relative) Position der mit den Ärmchen zusammenwirkenden Schwenkkulisse zwischen dem ersten und dem zweiten Übergabebereich verändert wird oder ist.

Des Weiteren ist es bei einer Weiterbildung des Verfahrens vorgesehen, dass
- bei Förderung von stabförmigen Artikeln einer ersten Art die Mittenlängsachsen der stabförmigen Artikel der ersten Art auf der ersten Fördertrommel entlang eines Kreisbogens mit einem vorbestimmten, insbesondere konstanten, Kreisbogenradius gefördert werden und
- bei Förderung von stabförmigen Artikeln einer ersten Art die Mittenlängsachsen der stabförmigen Artikel auf der dritten Fördertrommel entlang eines Kreisbogens mit einem vorbestimmten, insbesondere konstanten, Kreisbogenradius gefördert werden,
- wobei nach einem Wechsel der zu fördernden stabförmigen Artikel bei Förderung von stabförmigen Artikeln einer zweiten Art, deren Durchmesser sich vom Durchmesser der Artikel der ersten Art unterscheidet, die Mittenlängsachsen der stabförmigen Artikel der zweiten Art auf der ersten Fördertrommel entlang eines Kreisbogens mit einem vorbestimmten, insbesondere konstanten, Kreisbogenradius, der vom Kreisbogenradius bei Förderung der stabförmigen Artikel der ersten Art auf der ersten Fördertrommel verschieden ist, gefördert werden und
- wobei bei Förderung von stabförmigen Artikeln einer zweiten Art die Mittenlängsachsen der stabförmigen Artikel der zweiten Art auf der dritten Fördertrommel entlang eines Kreisbogens mit einem vorbestimmten, insbesondere konstanten, Kreisbogenradius, der vom Kreisbogenradius bei Förderung der stabförmigen Artikel der ersten Art auf der dritten Fördertrommel verschieden ist, gefördert werden.

Vorzugsweise werden die für die Förderung der stabförmigen Artikel vorgesehenen Fördertrommeln beibehalten.

Außerdem ist bei einer Anordnung zum Fördern von stabförmigen Artikeln der Tabak verarbeitenden Industrie, insbesondere Filterzigaretten oder deren stabförmige Komponenten, mit mehreren, um jeweils eine eigene Rotationsachse rotierenden oder rotierbaren Fördertrommeln zur queraxialen Förderung von stabförmigen Artikeln der Tabak verarbeitenden Industrie vorgesehen, dass die Fördertrommeln in queraxialer Förderrichtung der stabförmigen Artikel hintereinander angeordnet sind, wobei die Fördertrommeln zur Aufnahme von stabförmigen Artikeln jeweils mit Aufnahmemulden mit einer Muldenkontur ausgebildet sind, wobei weiter vorgesehen ist, dass die Aufnahmemulden wenigstens einer Fördertrommel auf verschwenkbaren Ärmchen der Fördertrommel ausgebildet sind, wobei die Ärmchen während der Rotation der Fördertrommel bei einem Umlauf jeweils mittels einer Schwenkkulisse um ihre jeweiligen Schwenkachsen verschwenkt werden, wobei durch die Schwenkkulisse die Aufnahmemulden mindestens zwei identische, vorzugsweise elliptische, Bewegungsabschnitte einer ellipsoiden Bewegungsbahn während eines Umlaufs ausführen, wobei die Schwenkkulisse in Abhängigkeit des Durchmessers der mittels der Fördertrommel zu fördernden stabförmigen Artikel eingestellt wird oder einstellbar ist.

Insbesondere ist es bevorzugt, dass durch die Schwenkkulisse die Aufnahmemulden eine ellipsenförmige, insbesondere eine elliptische, Bewegungsbahn während eines Umlaufs ausführen.

Die Förderanordnung umfasst mehrere Fördertrommeln, wobei wenigstens eine Fördertrommel, die zwischen einer ersten und einer dritten Fördertrommel angeordnet ist, verschwenkbare Ärmchen aufweisen kann. Die Förderanordnung ist dabei vorzugsweise Bestandteil einer Maschine der Tabak verarbeitenden Industrie, insbesondere Filteransetzmaschine. Durch die in Ihrer Ausrichtung einstellbare Schwenkkulisse wird eine sichere Übergabe zwischen zwei Fördertrommeln erreicht, wenn sich bei einem Produktionswechsel der Durchmesser der zu fördernden stabförmigen Artikel verändert. Durch die Anpassung der Position der Schwenkkulisse wird ein sicherer Transport zwischen den Übergabepunkten auf einer Fördertrommel erreicht, wobei während der Förderung der stabförmigen Artikel auf der Fördertrommel mit den verschwenkbaren Ärmchen die Aufnahmemulden bzw. die Mittenlängsachsen der zu fördernden stabförmigen Artikel eine ellipsenförmige Bewegung zwischen den Übergabebereichen ausführen. Hierbei werden unter Verwendung der Schwenkkulisse die Ärmchen mit ihren Aufnahmemulden entlang einer elliptischen Bahn während eines kompletten Umlaufes der Fördertrommel geführt bzw. bewegt.

Dazu ist in einer Ausgestaltung der Anordnung vorgesehen, dass die mit der Schwenkkulisse ausgebildete Fördertrommel zwischen einer ersten Fördertrommel und einer dritten Fördertrommel in Bezug auf die Förderrichtung der stabförmigen Artikel ausgebildet ist.

Des Weiteren zeichnet sich eine Weiterbildung der Anordnung dadurch aus, dass die Fördertrommel derart ausgebildet ist, dass für die Förderung von stabförmigen Artikeln einer ersten Art die in den Aufnahmemulden der Fördertrommel angeordneten stabförmigen Artikel mit ihren Mittenlängsachsen auf einer ersten Ellipsenbogenbahn zwischen einem ersten Übergabebereich zur Aufnahme von stabförmigen Artikeln und einem zweiten Übergabebereich zur Abgabe von stabförmigen Artikeln förderbar sind und nach einem Wechsel für die Förderung von stabförmigen Artikeln einer zweiten Art mit einem Durchmesser, der sich vom Durchmesser der Artikel der ersten Art unterscheidet, die in den Aufnahmemulden der Fördertrommel angeordneten stabförmigen Artikel der zweiten Art mit ihren Mittenlängsachsen auf einer zweiten Ellipsenbogenbahn zwischen dem ersten Übergabebereich und dem zweiten Übergabebereich förderbar sind, wobei für den Wechsel der zu fördernden stabförmigen Artikeln die Position der mit den Ärmchen zusammenwirkenden Schwenkkulisse an der Fördertrommel verändert wird oder ist. Hierbei wird eine Schwenkkulisse für die zu verschwenkenden Ärmchen der Fördertrommel verwendet, die eine unveränderbare, d.h. konstante, Form aufweist, so dass die Form der elliptischen Bewegungsbahn bei einem kompletten Umlauf der Fördertrommel nicht verändert wird. Vielmehr wird bei einem Wechsel der zu fördernden stabförmigen Artikel im Durchmesser die relative Position der Schwenkkulisse zu den Ärmchen bzw. zu deren Schwenkachsen eingestellt oder verändert, so dass durch eine Veränderung der Position der Schwenkkulisse eine andere Ellipsenbogenbahn zwischen den Übergabebereichen an der (zweiten) Fördertrommel für die zu fördernden stabförmigen Artikel der ersten Art und für die stabförmigen Artikel der zweiten Art ausgebildet wird.

Ferner wird die Aufgabe gelöst durch eine Maschine der Tabak verarbeitenden Industrie, insbesondere Filteransetzmaschine, zur Herstellung von stabförmigen Artikeln der Tabak verarbeitenden Industrie, insbesondere Filterzigaretten, mit einer voranstehend beschriebenen Anordnung zum Fördern von stabförmigen Artikeln der Tabak verarbeitenden Industrie. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Filteransetzmaschine zum Herstellen von Filterzigaretten in einer Vorderansicht,
- Fig. 2a bis: 2c schematisch jeweils eine Ansicht einer erfindungsgemäßen Anordnung von Fördertrommeln einer Filteransetzmaschine,
- Fig. 3a: schematisch einen Ausschnitt einer erfindungsgemäßen Fördertrommel im Querschnitt,
- Fig. 3b: schematisch einen Ausschnitt einer erfindungsgemäßen Fördertrommel in einem Längsschnitt,
- Fig. 4a, 4b: jeweils schematisch einen Querschnitt durch eine nicht erfindungsgemäße Fördertrommel mit zentrisch gelagerten Auflagestiften für stabförmige Artikel,
- Fig. 5a, 5b: schematisch einen Ausschnitt der in Fig. 4a, 4b gezeigten Fördertrommel,
- Fig. 6: schematisch eine Ansicht einer nicht erfindungsgemäßen Aufnahmemulde mit exzentrisch gelagerten Auflagestiften,
- Fig. 7a: schematisch einen Querschnitt durch eine weitere nicht erfindungsgemäßen Fördertrommel mit veränderbaren Aufnahmemulden für stabförmige Artikel,
- Fig. 7b: einen vergrößerten Ausschnitt der in Fig. 7a dargestellten Fördertrommel,
- Fig. 8a, 8b: schematisch jeweils eine Ansicht einer Anordnung von Fördertrommeln einer Filteransetzmaschine mit einer nicht erfindungsgemäßen Fördertrommel mit verschwenkbaren Ärmchen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

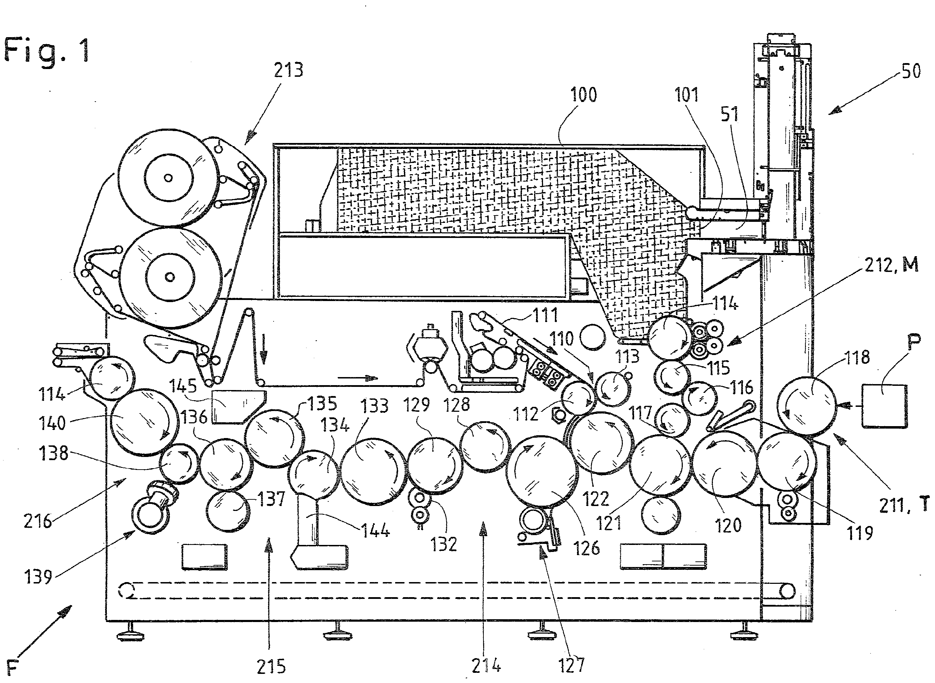

In Fig. 1 ist eine Filteransetzmaschine F in einer Vorderansicht ausschnittsweise dargestellt, wobei die Filteransetzmaschine F über eine Trommelanordnung T zur Zuführung von Tabakstöcken von einer schematisch eingezeichneten Zigarettenstrangmaschine P Tabakstöcke doppelter Gebrauchslänge empfängt.

Eine Zigarettenstrangmaschine ist unter der Bezeichnung "PRO-TOS" der HAUNI Maschinenbau AG, Hamburg, bekannt. Unter der Bezeichnung "MAX" ist eine Filteransetzmaschine der HAUNI Maschinenbau AG, Hamburg, als Maschine der Tabak verarbeitenden Industrie bekannt.

Die in Figur 1 schematisch gezeigte Filteransetzmaschine F weist verschiedene Funktionseinheiten auf: eine Tabakstockzufuhreinrichtung 211 mit einer Trommelanordnung T, eine Filterzufuhreinrichtung 212 mit einer Trommelanordnung M, eine Belagpapierzufuhreinrichtung 213, eine Zigarettenherstelleinrichtung 214, eine Zigarettenprüfeinrichtung 215 sowie eine Zigarettenabgabeeinrichtung 216.

Die Trommelanordnung T der Tabakstockzufuhreinrichtung 211 weist mehrere Fördertrommeln 118, 119, 120 auf. Nach der Übergabe der doppelt langen Tabakstöcke von der Zigarettenstrangmaschine P an eine Übernahmetrommel 118 werden die doppelt langen Tabakstöcke queraxial gefördert und an eine Schneidtrommel 119 übergeben, auf der die doppelt langen Tabakstöcke mittels eines an der Schneidtrommel 119 angeordneten Schneidmessers in einfach lange Tabakstöcke geschnitten werden. Von der Schneidtrommel 119 werden die Tabakstöcke einfacher Gebrauchslänge an eine Spreiztrommel 120 übergeben, auf der die geschnittenen Tabakstockpaare längsaxial voneinander beabstandet bzw. gespreizt werden. Anschließend werden die längsaxial beabstandeten Tabakstockpaare zur Zusammenstelltrommel 121 transportiert.

Auf ihrem Förderweg zu einer Zusammenstelltrommel 121 werden die Tabakstöcke doppelter Gebrauchslänge geschnitten und längsaxial gespreizt. Auf der Zusammenstelltrommel 121 werden doppeltlange Filterstopfen über eine weitere Trommelanordnung M der Filterzufuhreinrichtung 212 transportiert, die jeweils zwischen zwei längsaxial beabstandete Tabakstöcke eingefügt werden. Hierdurch wird auf der Zusammenstelltrommel 121 eine Folge von queraxial hintereinander angeordneten Tabakstock-Filterstopfen-Tabakstock-Gruppen gebildet.

Um doppeltlange Filterstopfen zwischen die längsaxial beabstandeten Tabakstockpaare auf der Zusammenstelltrommel 121 einzulegen bzw. anzuordnen, verfügt die Trommelanordnung M über eine Entnahmetrommel 114, mittels der Filterstäbe aus einem Filterstabmagazin 100 entnommen werden und unter Verwendung von an der Entnahmetrommel 114 angeordneten Schneidmessern in Filterstopfen doppelter Länge geschnitten werden. Anschließend werden die Filterstopfen an eine Spreiztrommel 115 und eine nachfolgende Staffeltrommel 116 übergeben. Die gestaffelten Filterstopfen doppelter Länge werden anschließend von der Staffeltrommel 116 an eine nachfolgende Einlegetrommel 117 übergeben und queraxial zu der Zusammenstelltrommel 121 gefördert, so dass auf der Zusammenstelltrommel 121 Artikelgruppen aus Tabakstock-Filterstopfen-Tabakstock-Gruppen gebildet werden.

Die zusammengestellten Artikelgruppen aus Tabakstock-Filterstopfen-Tabakstock-Gruppen werden von der Zusammenstelltrommel 121 an eine Fördertrommel 122 übergeben. Gleichzeitig werden von einem Belagapparat 110 der Belagpapierzufuhreinrichtung 213 Belagpapierblättchen den zusammengestellten Tabakstock-Filterstopfen-Tabakstock-Gruppen synchron zugeführt. In DE-C-39 18 137 ist ausführlich ein Belagapparat beispielsweise beschrieben, der vollumfänglich in den Inhalt der vorliegenden Anmeldung aufgenommen wird.

Ein beleimter und geförderter Belagpapierstreifen 111 wird hierbei im Belagapparat 110 auf einer Schneidtrommel 112 von den Messern einer Messertrommel 113 in Belagblättchen bzw. Verbindungsblättchen geschnitten. Die geschnittenen Verbindungsblättchen werden jeweils an die Artikelgruppen bzw. Tabakstock-Filterstopfen-Tabakstock-Gruppen auf der Fördertrommel 122 übergeben bzw. angeheftet.

Nach dem Anheften der geschnittenen und der einzelnen Verbindungsblättchen an jeweils eine Artikelgruppe werden die Artikelgruppen weiter zu einer nachfolgenden Rolltrommel 126 und einer Rolleinrichtung 127 transportiert, mittels der die Verbindungsblättchen vollständig um die Tabakstock-Filterstopfen-Tabakstock-Gruppen herumgewickelt werden. Die Rolleinrichtung 127 besteht in einer Ausgestaltung aus einem Stegrad, einer Rollhand mit einer Rollfläche und ausgangsseitig einer Rollwalze, wobei die Rollfläche und die Rolltrommel 126 einen Rollkanal bilden, in dem Artikelgruppen mit den Verbindungsblättchen umwickelt werden, womit doppeltlange Filterzigaretten gebildet werden.

Die doppeltlangen Filterzigaretten werden nachfolgend an eine Fördertrommel 128 und danach an eine als Schneidtrommel ausgebildete Fördertrommel 129 übergeben und für den weiteren Bearbeitungsprozess an einer Filteransetzmaschine bereitgestellt. An einer Schneidtrommel 129 ist ein Schneidmesser 132 angeordnet, welches aus den doppeltlangen Filterzigaretten durch einen mittigen Trennschnitt Filterzigaretten einfacher Gebrauchslänge herstellt.

Die Filterzigaretten einfacher Gebrauchslänge werden anschließend von der Schneidtrommel 129 an eine Spreiztrommel 133 übergeben. Auf der Spreiztrommel 133 werden die Filterzigarettenpaare längsaxial voneinander beabstandet und anschließend an eine erste doppelbahnige Prüftrommel 134 übergeben. An der Prüftrommel 134 ist ein erstes Prüforgan 144 angeordnet, welches die Filterzigaretten einer ersten Prüfung, z. B. einer Kopfendenprüfung, unterzieht.

Im Rahmen der Erfindung ist es möglich, dass die hergestellten Filterzigaretten an dem ersten Prüforgan 144 einer Dichtigkeitsprüfung und/oder einer Kopfendenprüfung und/oder einer Ventilationsprüfung unterzogen werden. Darüber hinaus ist es im Rahmen der Erfindung möglich, dass mittels des Prüforgans 144 eine optische Prüfung der Zigaretten auf der Trommel 134 durchgeführt wird.

Anschließend werden die Zigaretten von der Prüftrommel 134 an eine nachfolgende zweite Prüftrommel 135 übergeben, an der ein zweites Prüforgan 145 angeordnet ist, um die Zigaretten weiteren Qualitätsprüfungen und/oder mindestens einer der zuvor genannten an der Prüftrommel 134 nicht durchgeführten Prüfung zu unterziehen.

Von der Prüftrommel 135 werden die Filterzigaretten an eine Fördertrommel 136 übergeben. An der Fördertrommel 136 ist eine Probeentnahmetrommel 137 angeordnet, um gezielt einzelne Stichproben aus dem Artikelstrom der fertig hergestellten Filterzigaretten zu entnehmen.

Von der Fördertrommel 136 werden die beiden gebildeten Reihen mit queraxial hintereinander angeordneten Filterzigaretten einfacher Gebrauchslänge an eine Wendetrommel 138 mit einer an der Wendetrommel 138 angeordneten Wendeeinrichtung 139 übergeben, so dass bei Abgabe der Filterzigaretten von der Wendetrommel 138 an eine nachfolgende Fördertrommel 140 die Filterzigaretten in einer Reihe hintereinander queraxial angeordnet bzw. gefördert werden. Von der Fördertrommel 140 werden anschließend die hergestellten Filterzigaretten an eine Abgabetrommel 141 abgegeben, mittels der die Filterzigaretten an ein Ablegerband übergeben werden.

In dem Filtermagazin 100 werden die für die Filterzigarettenherstellung erforderlichen Filterstäbe bevorratet bereitgestellt, wobei die Filterstäbe über eine seitlich am Filtermagazin 100 angeordnete, Zuführeinrichtung 50 für die Filterstäbe befüllt werden. Mittels der Zuführeinrichtung 50 werden an der mit einem Einlass 101 ausgebildeten Zuführseite des Filtermagazins 100 als stabförmige Artikel Filterstäbe in den Vorratsraum bzw. Speicherraum des Filtermagazins 100 unter queraxialer Förderung in das Filtermagazin 100 eingebracht.

Die Zuführeinrichtung 50 verfügt über einen horizontalen Förderkanal 51, der am Einlass 101 des Filtermagazins 100 mündet und über den die von der Zuführeinrichtung 50 bereitgestellten stabförmigen Filterstäbe in das Filtermagazin 100 hineingefördert werden. Hierzu verfügt der Förderkanal 51 an seiner Unterseite über wenigstens ein Förderband, so dass die auf dem Förderband des Förderkanals 51 abgelegten Filterstäbe unter queraxialer Förderung der Filterstäbe über den Einlass zur Befüllung des Filtermagazins 100 hineingeschoben werden.

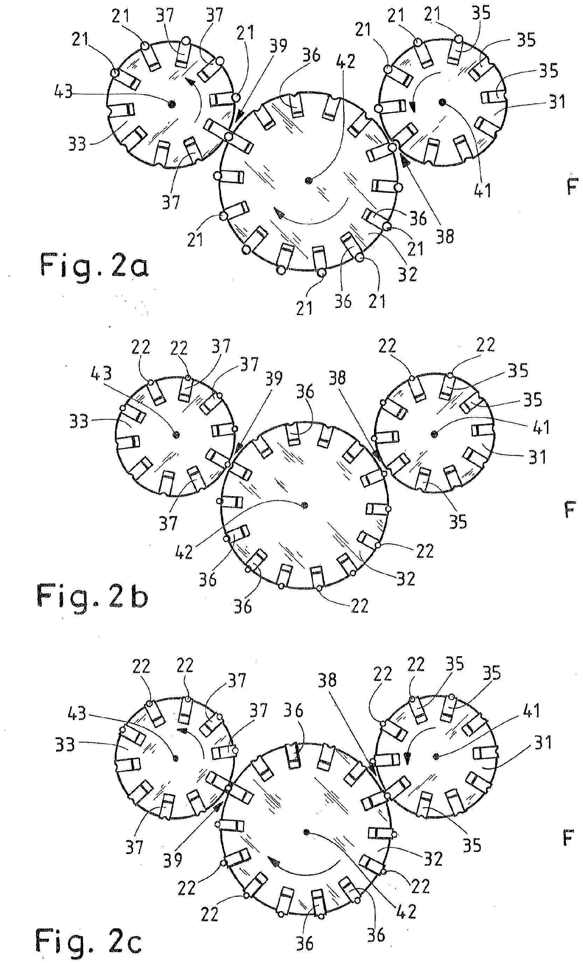

In den Fig. 2a bis 2c ist jeweils eine Anordnung von drei Fördertrommeln 31, 32, 33 in einer schematischen Ansicht dargestellt, wobei die Anordnung der Fördertrommeln 31, 32, 33 Bestandteil einer voranstehend beschriebenen Filteransetzmaschine F sind, die in Förderrichtung von stabförmigen Artikeln bezogen auf die queraxiale Förderrichtung der stabförmigen Artikel hintereinander angeordnet sind. Die Fördertrommeln 31, 32, 33 weisen auf ihren äußeren Trommelkörpern jeweils radial verschiebbare mit Aufnahmemulden ausgebildete Muldenträgerkörper 35, 36, 37 an ihrer Außenseite auf, wobei die nutförmigen oder U-förmigen Aufnahmemulden der Muldenträgerkörper 35, 36, 37 jeweils eine konstante Kontur aufweisen.

Die Muldenträgerkörper 35, 36, 37 sind gegenüber dem jeweiligen Trommelkörper der Fördertrommeln 31, 32, 33 radial verschiebbar ausgebildet, wodurch bei gleichzeitiger Verschiebung der Muldenträgerkörper 35, 36, 37 der Teilungsabstand zwischen den Aufnahmemulden sowie der Muldenmittenachsen der Aufnahmemulden der Muldenträgerkörper 35, 36, 37 bei der jeweiligen Fördertrommel 31, 32, 33 veränderbar ist. Hierdurch ist der Teilungsabstand zwischen zwei Aufnahmemulden einer Fördertrommel variierbar, wobei die auf den Muldenträgerkörper 35, 36, 37 ausgebildeten Aufnahmemulden in ihrer Form nicht veränderbar sind und dadurch eine vorbestimmte, feste Muldenkontur aufweisen.

Die Fördertrommeln 31, 32, 33 werden von (hier nicht dargestellten) Antrieben oder einem (hier nicht dargestellten) Antrieb angetrieben, so dass die Fördertrommeln 31, 32, 33 um ihre jeweilige Rotationsachse 41, 42, 43 angetrieben werden.

In Fig. 2a ist schematisch dargestellt, dass die Fördertrommeln 31, 32, 33 stabförmige Artikel 21 (als stabförmige Artikel einer ersten Art) fördern, wobei in einem Übergabebereich 38 die stabförmigen Artikel 21 von der Fördertrommel 31 an die nachfolgende Fördertrommel 32 übergeben werden. Anschließend werden die stabförmigen Artikel 21 auf der Fördertrommel 32 zu einem zweiten Übergabebereich 39 zwischen der Fördertrommel 32 und der nachfolgenden Fördertrommel 33 gefördert, so dass im Übergabebereich 39 die stabförmigen Artikel 21 an die Fördertrommel 33 übergeben werden.

An der Filteransetzmaschine F werden Filterzigaretten hergestellt, wobei als stabförmige Artikel 21 Tabakstöcke und/oder Filterstopfen einzeln oder gruppenweise gefördert werden. Hierbei werden an der Filteransetzmaschine F Filterzigaretten mit einem vorbestimmten Durchmesser hergestellt. Nach Beendigung der Produktion an der Filteransetzmaschine werden die Fördertrommel 31, 32, 33 angehalten (vgl. Fig.2b).

Um anschließend an der Filteransetzmaschine F Filterzigaretten mit einem kleineren Durchmesser herzustellen, werden die Fördertrommeln 31, 32, 33 in ihrer relativen Anordnung beibehalten, wobei die Muldenträgerkörper 35, 36, 37 in ihrer radialen Position nach außen bewegt werden, um unter Beibehaltung derselben Fördertrommeln 31, 32, 33 mit ihren ortsfesten Rotationsachsen 41, 42, 43 den Abstand zwischen den Fördertrommeln 31, 32, 33 in den Übergabebereichen 38, 39 zu verringern, so dass bei Förderung von stabförmigen Artikeln 22 (als stabförmige Artikel einer zweiten Art), die einen kleineren Durchmesser als die stabförmigen Artikel 21 gemäß der in Fig. 2a dargestellten Ausführungsform haben, bei der Übergabe von stabförmigen Artikeln 22 diese nicht mechanisch beansprucht werden, so dass der Kreisbogen der Mittenlängsachsen der geförderten stabförmigen Artikel 22 auf jeder Fördertrommel 31, 32, 33 größer ist als der Kreisbogen der Mittenlängsachsen der stabförmigen Artikel 21, die einen größeren Durchmesser aufweisen (vgl. Fig. 2a, 2b).

Um die mechanische Beanspruchung der im Durchmesser kleineren stabförmigen Artikel 22 bei Förderung an der Filteransetzmaschine herabzusetzen, werden die Muldenträgerkörper 35, 36, 37 radial nach außen bewegt, wobei die Bewegung unter Verwendung jeweils einer (hier nicht dargestellten) Verstelleinrichtung erfolgt. Hierdurch werden die Muldenträgerkörper 35, 36, 37 in den Übergabebereichen 38, 39 zwischen den benachbarten Fördertrommeln 31, 32, 33 einander angenähert.

Nach einer radialen Einstellung der Muldenträgerkörper 35, 36, 37 an den jeweiligen Fördertrommeln 31, 32, 33 sind die Muldenträgerkörper 35, 36, 37 in eine veränderte Position oder Arbeitsposition (vgl. Fig. 2c) verschoben, so dass der Teilungsabstand der Aufnahmemulden an den jeweiligen Fördertrommeln 31, 32, 33 geändert ist, wodurch sich der radiale Abstand der Muldenmittelpunkte bzw. Muldengründe der Aufnahmemulden für stabförmige Artikel mit einem kleinen Durchmesser sich vom Kreisbogen der Muldenmittenachsen der Aufnahmemulden für Artikel mit einem größeren Durchmesser unterscheidet. Somit ist der der radiale Abstand zur Rotationsachse der Fördertrommel bei der Förderung von stabförmigen Artikeln mit einem kleinen Durchmesser größer als der radiale Abstand bei Förderung von im Durchmesser größeren stabförmigen Artikeln. Dabei ist erfindungsgemäß vorgesehen, dass bei Aufnahme von stabförmigen Artikeln 21 (als Artikel einer ersten Art) (vgl. Fig. 2a) in den Aufnahmemulden der jeweiligen Fördertrommeln 31, 32, 33 der Kreisbogen der Mittenlängsachsen der stabförmigen Artikel 21 dem Kreisbogen der Mittenlängsachsen der stabförmigen Artikel 22 (als Artikel der zweiten Art) (vgl. Fig. 2c) annähernd entspricht.

Durch die radiale Ausrichtung der beweglich ausgebildeten Muldenträgerkörper 35, 36, 37 wird nach radialem Verschieben der Muldenträgerkörper 35, 36, 37 die Produktion von Filterzigaretten an der Filteransetzmaschine F mit stabförmigen Artikeln 22 fortgesetzt, die einen kleineren Durchmesser als die vorangehende Produktion von Filterzigaretten mit stabförmigen Artikeln 21 mit größerem Durchmesser (vgl. Fig. 2a) aufweisen.

Durch die Anpassung bzw. Veränderung der Teilungsabstände der Aufnahmemulden entfällt bei einem Produktionswechsel an der Filteransetzmaschine ein Tausch der Fördertrommeln, wodurch die Umbauzeiten für einen Formatwechsel an der Filteransetzmaschine und Formatteile reduziert werden.

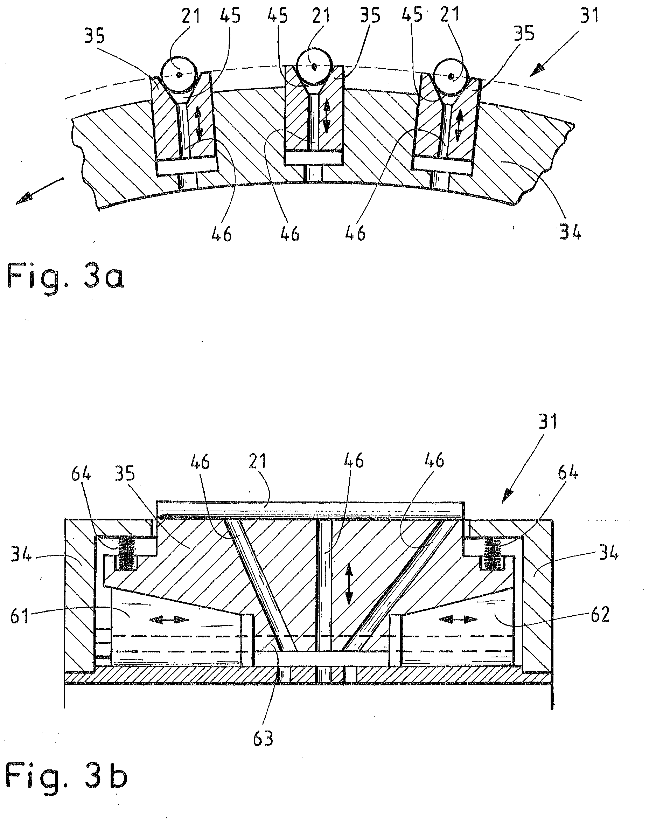

In Fig. 3a ist schematisch eine Detailansicht der Fördertrommel 31 (vgl. Fig. 2a bis 2c) im Querschnitt ausschnittsweise dargestellt. In Fig. 3b ist schematisch ein Schnitt durch die Fördertrommel 31 im Ausschnitt dargestellt.

Die Fördertrommel 31 weist einen Trommelkörper 34 auf, der Ausnehmungen aufweist, in denen die radial bewegbaren Muldenträgerkörper 35 verschiebbar und formkomplementär angeordnet sind. Die Muldenträgerkörper 35 weisen an ihrer Außenseite jeweils eine Aufnahmemulde 45 auf, die eine gleichbleibende, d.h. konstante, Form im Querschnitt aufweisen. Die Muldenträgerkörper 35 weisen radial verlaufende Saugbohrungen 46 auf, so dass bei Förderung der stabförmigen Artikel 21 in den Aufnahmemulden 45 die stabförmigen Artikel 21 mit Unterdruck während der Förderung beaufschlagt sind oder werden.

Durch die radiale Verschiebung der Muldenträgerkörper 35 wird erreicht, dass der Teilungsabstand der Aufnahmemulden 45 veränderbar ist, so dass für die Förderung der stabförmigen Artikel der Teilungsabstand, d.h. der queraxiale Abstand zwischen den Aufnahmemulden 45 der Fördertrommel 31, angepasst wird.

Fig. 3b zeigt einen Querschnitt durch die Fördertrommel 31 bzw. durch einen Muldenträgerkörper 35. Im Inneren der Fördertrommel 31 sind horizontal verschiebbare bzw. einstellbare Verstellkörper 61, 62 angeordnet, die jeweils eine zur Horizontalen geneigte Führungsfläche aufweisen, auf denen eine ebenfalls zur Horizontalen geneigte Gleitfläche des Muldenträgerkörpers 35 an dessen Unterseite aufliegt.

Der Verstellkörper 61 ist in längsaxialer Richtung von dem Verstellkörper 62 beabstandet, wobei die beiden Verstellkörper 61, 62 mittels einer Verstellschraube 63 miteinander verbunden sind. Die Verstellschraube 63 weist ein Links-Rechts-Gewinde auf, so dass durch Drehen der Verstellschraube 63 der Abstand zwischen den Verstellkörpern 61, 62 verändert wird, wodurch aufgrund der geneigten Auflageflächen der Verstellkörper 61, 62 die gleichzeitige horizontale Bewegung der Verstellkörper 61, 62 zu einer radialen Bewegung des Muldenträgerkörpers 35 führt.

An der Oberseite des Muldenträgerkörpers 35 sind als Gegenlager für den Muldenträgerkörper Federn 64 ausgebildet, um den Muldenträgerkörper 35 gegen die Verstellkörper 61, 62 zu drücken.

Unterhalb der als Segmente ausgebildeten Muldenträgerkörper 35 sind beispielsweise als Verstellkörper 61, 62 für den Muldenträgerkörper 35 Kegelspreizringe im Trommelkörper der Fördertrommel 31 angeordnet, die mittels der als Zentralschraube vorgesehenen Verstellschraube 63 auseinander oder zusammen gezogen werden. Durch die Axialbewegung der Spreizringe als Verstellkörper 61, 62 werden die Muldenträgerkörper 35 auseinander geschoben oder radial nach innen gedrückt, wodurch der Teilkreis der Mittenlängsachsen der zu fördernden stabförmigen Artikel 21, 22 bei einer Durchmesseränderung der stabförmigen Artikel konstant gehalten werden kann. Die Einstellung der Muldenträgerkörper 35 kann dabei stufenlos ausgeführt werden bzw. erfolgen.

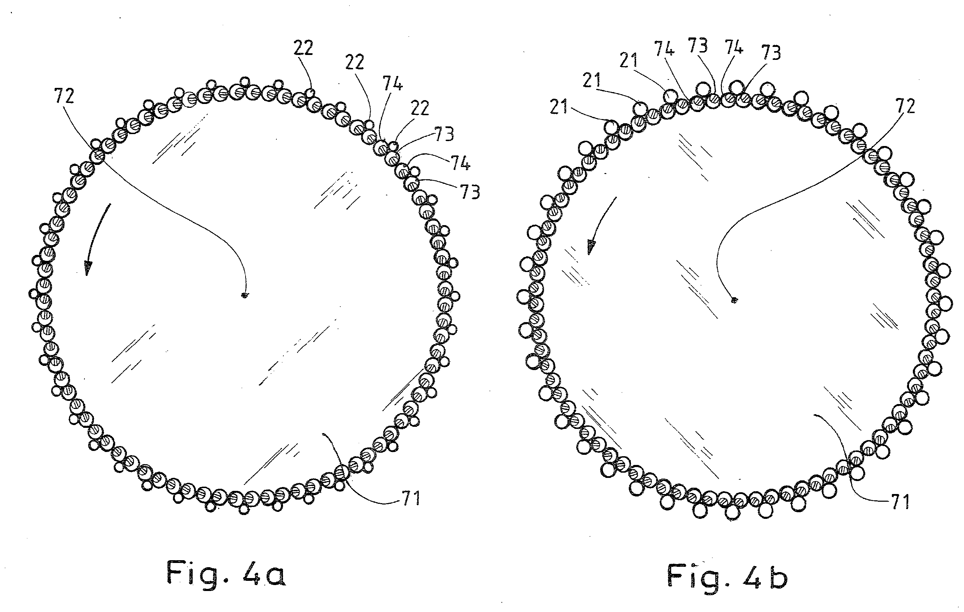

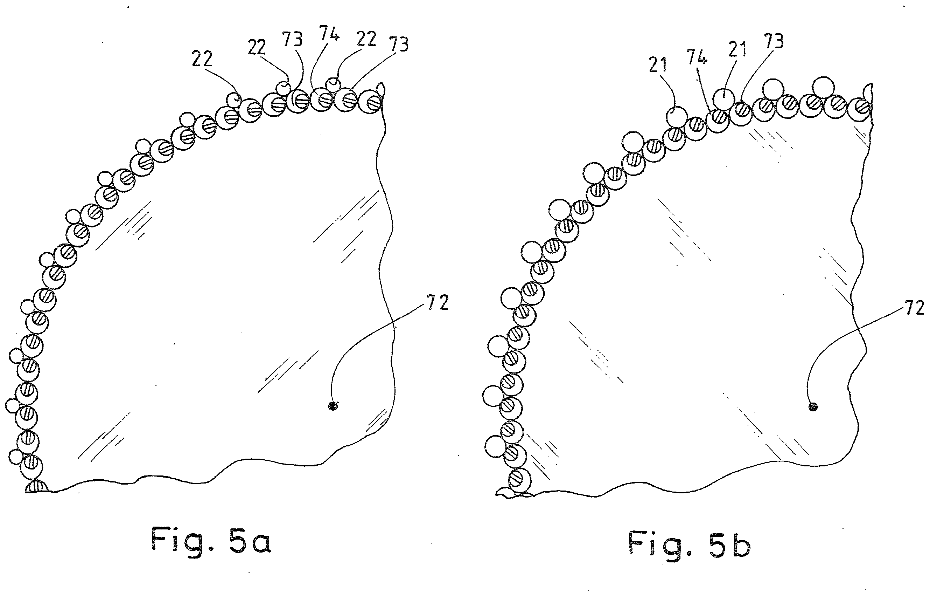

In den Fig. 4a, 4b ist jeweils eine schematische Ansicht einer Fördertrommel 71 der Tabak verarbeitenden Industrie gezeigt, wobei auf der Fördertrommel 71 im Durchmesser unterschiedliche stabförmige Artikel 21, 22 gefördert werden. Die Figuren 5a und 5b zeigen schematisch Ausschnitte der Fördertrommel 71.

Die Fördertrommel 71 weist in Umfangsrichtung als Auflagekörper für die stabförmigen Artikel 21, 22 Auflagestangen oder Auflagestifte 73, 74 auf, wobei durch jeweils ein Paar Auflagestifte 73, 74 eine Aufnahmemulde für die zu fördernden stabförmigen Artikel 21, 22 zwischen den Auflagestiften bilden. Die Auflagestifte 73, 74 sind parallel zur Rotationsachse 72 der Fördertrommel 71 ausgerichtet, wobei die Auflagestifte 73, 74 in Umfangsrichtung um eine Schwenkachse 75, 76 exzentrisch zur Mittenlängsachse gelagert sind.

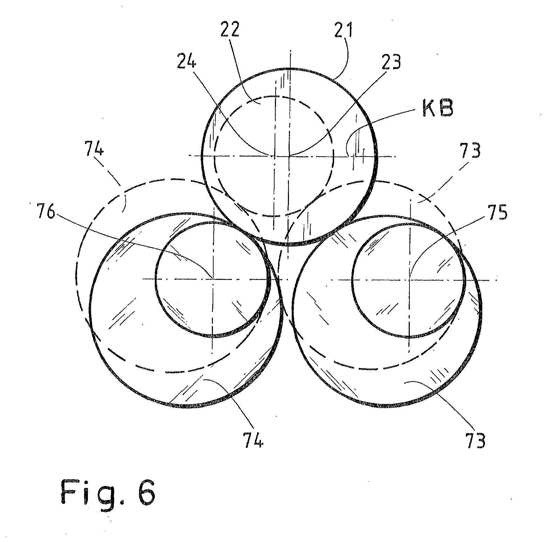

In Fig. 6 ist schematisch eine Ansicht der Auflagestifte 73, 74 der Fördertrommel 71 (vgl. Fig. 4a, 4b) dargestellt. Die Auflagestifte 73, 74 sind exzentrisch um eine Schwenkachse 75, 76 gelagert, wobei die Schwenkachse 75, 76 außerhalb der Mittenlängsachse der Auflagestifte 73, 74 ausgebildet ist. Zwischen den benachbarten Auflagestiften 73, 74 wird im Zwischenraum eine Aufnahmemulde für die zu fördernden stabförmigen Artikel 21 bzw. 22 ausgebildet, wobei die zu fördernden stabförmigen Artikel 21, 22 einen annährend linienförmigen Kontakt mit der Außenfläche der kreisrund ausgebildeten Auflagestifte 73, 74 aufweisen.

Durch einen gemeinsamen Verstellmechanismus werden die Auflagestifte 73, 74 gleichzeitig bei Betätigung des Verstellmechanismus um ihre Schwenkachsen 75, 76 geschwenkt. Aufgrund der Verschwenkbarkeit der Auflagestifte 73, 74 ist es bei Förderung von unterschiedlich dicken stabförmigen Artikeln 21, 22 möglich, dass die Mittenlängsachsen 23, 24 der stabförmigen Artikel 21 bzw. 22 auf annähernd demselben Kreisbogen KB gefördert werden. Dadurch ist es möglich, dass bei einer Änderung des Produktdurchmessers der stabförmigen Artikel 21, 22 die Aufnahmemulden an der Fördertrommel in Abhängigkeit der Durchmesser der zu fördernden stabförmigen Artikel 21, 22 angepasst werden, wobei stets gewährleistet ist, dass die Mittenlängsachsen 23, 24 der stabförmigen Artikel 21 bzw. 22 auf annähernd demselben Kreisbogen KB gefördert werden. Hierdurch wird eine durchmesserflexible Fördertrommel 71 mit einer Anpassung der Teilkreise durch die exzentrisch gelagerten Auflagestifte 73, 74 bereitgestellt.

Gemäß der Erfindung ist somit bei einem Transport von stabförmigen Artikeln ein schneller Produktwechsel an einer Filteransetzmaschine möglich, wobei die zu fördernden stabförmigen Artikel 21 bzw. 22 auf demselben Teilkreisdurchmesser für die stabförmigen Artikel gefördert werden. Darüber hinaus wird bei einer Veränderung der Aufnahmemulde zwischen den Auflagestiften 73, 74 der Teilungsabstand zwischen den Muldenmittenachsen von zwei benachbarten Aufnahmemulden verändert. Um die Auflagestifte 73, 74 exzentrisch zu verdrehen, sind entsprechende Antriebe oder Antriebseinrichtungen vorgesehen. Dabei kann die Verdrehung der Auflagestifte 73, 74 beispielsweise durch einen Antrieb mittels eines Getriebes oder Stirnradgetriebes oder eines Riemenantriebs erreicht werden.

Auch oval ausgebildete Auflagestifte 73, 74 sind als Auflagestifte für die stabförmigen Artikel einsetzbar.

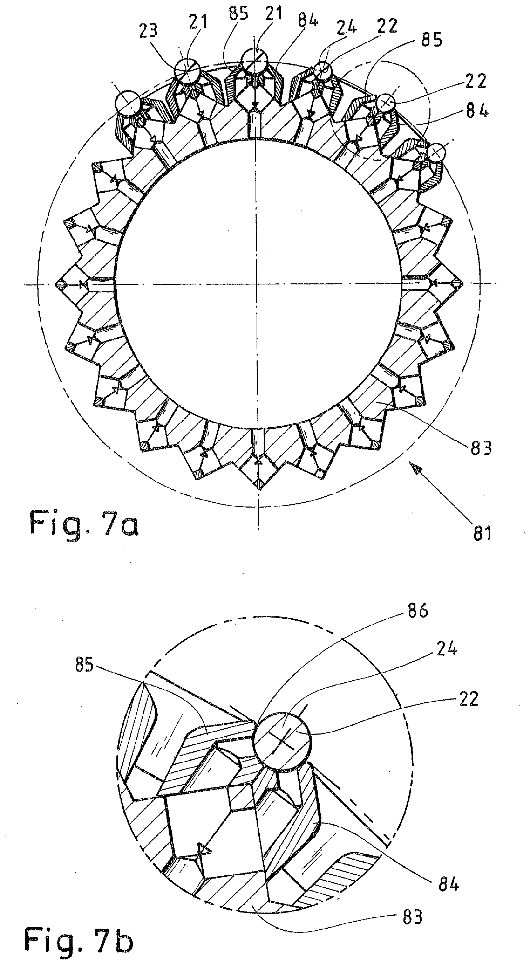

In Fig. 7a ist schematisch ein Querschnitt durch eine Fördertrommel 81 dargestellt, wobei die Fördertrommel 81 einen Trommelkörper 83 aufweist, der an seiner Außenseite in Umfangsrichtung zick-zackförmige Erhebungen und Vertiefungen aufweist. In Fig. 7b ist eine vergrößerte Teilansicht der mit einem Kreis markierten Aufnahmemulde in Fig. 7a schematisch dargestellt.

Wie aus Fig. 7b ersichtlich, sind an den beiden Seiten einer Erhebung des Trommelkörpers 83 jeweils ein in seiner Position veränderbarer Muldenformkörper 84, 85 angeordnet, die im Zusammenwirken an ihrer Außenseite eine Aufnahmemulde 86 für den stabförmigen Artikel 22 bilden.

Die Muldenformkörper 84, 85 sind gegenüber der rampenförmigen Erhebung des Trommelkörpers 83 verschiebbar ausgebildet, so dass der Abstand zwischen den Muldenformkörpern 84, 85 variierbar ist, wodurch der Abstand und auch die Größe der Aufnahmemulde 86 veränderbar ist. Zur Aufnahme von im Durchmesser größeren stabförmigen Artikeln 21 (vgl. Fig. 7a) sind die Muldenformkörper 84, 85 weiter beabstandet als bei der Aufnahme von im Durchmesser kleineren stabförmigen Artikeln 22.

Durch die Beabstandung der jeweils eine Aufnahmemulde 86 ausbildenden Muldenformkörper 84, 85 wird der Muldenmittelpunkt bzw. die Muldenmittelpunktsachse der ausgebildeten Aufnahmemulde 86 verändert, wobei gleichzeitig der Teilungsabstand zwischen zwei Muldenmittenachsen von zwei benachbarten Aufnahmemulden veränderbar ist.

Durch Beabstandung der Muldenformkörper 84, 85 wird die Größe der Aufnahmemulden 86 an die Größe bzw. den Durchmesser der zu fördernden stabförmigen Artikel 21, 22 entsprechend für die Produktion an einer Filteransetzmaschine angepasst. Hierbei wird die Größe bzw. die Form der Aufnahmemulde 86 in Abhängigkeit des Durchmessers der zu fördernden stabförmigen Artikel 21, 22 eingestellt bzw. angepasst. Hierdurch wird erreicht, dass bei einem Produktionswechsel und der Förderung von stabförmigen Artikeln mit einem geänderten Durchmesser der radiale Abstand der Muldenmittelpunkte bzw. Muldengründe der Aufnahmemulden 86 für unterschiedliche Durchmesser unterschiedlich ist, wobei der Kreisbogen der Mittenlängsachsen der zu fördernden stabförmigen Artikel 21, 22 einander entsprechen. Hierdurch wird erreicht, dass die Mittenlängsachsen 23, 24 für im Durchmesser unterschiedliche stabförmige Artikel 21, 22 jeweils einander entsprechen.

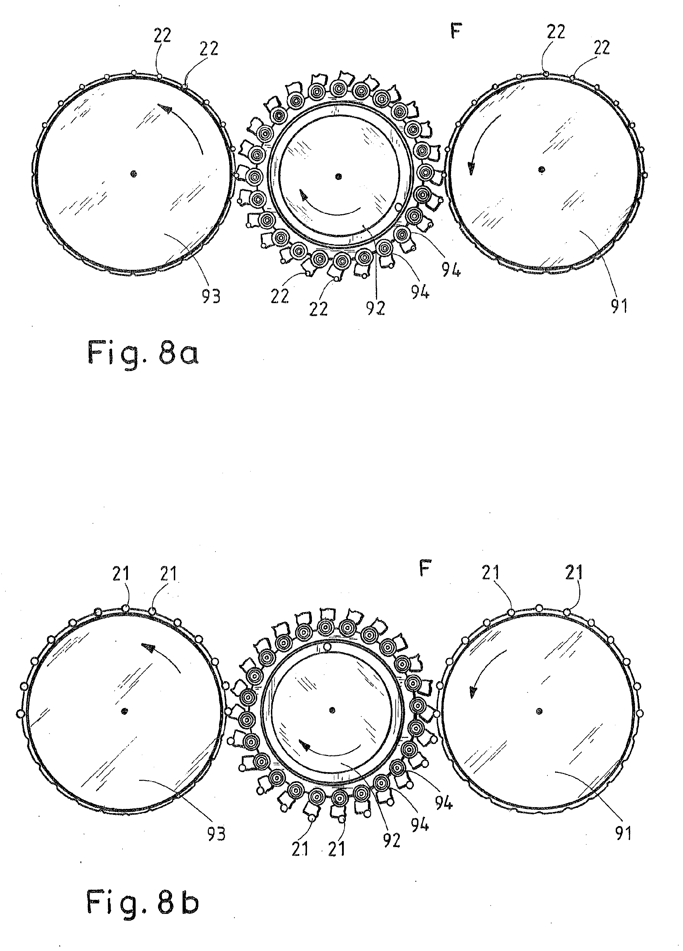

In Fig. 8a, 8b sind jeweils schematische Ansichten einer Anordnung von Fördertrommeln 91, 92, 93 an einer Filteransetzmaschine F dargestellt. Bei der Anordnung der Fördertrommeln sind die Fördertrommeln 91, 92, 93 in Förderrichtung der zu fördernden stabförmigen Artikel 21, 22 queraxial hintereinander angeordnet.

In Fig. 8a ist schematisch dargestellt, dass die Fördertrommel 91 stabförmige Artikel 22 (als stabförmige Artikel einer zweiten Art) queraxial zu einem Übergabebereich zwischen der Fördertrommel 91 und der mit Ärmchen ausgebildeten Fördertrommel 92 fördert und an die verschwenkbaren, mit einer Aufnahmemulde versehenen Ärmchen 94 der Fördertrommel 92 übergibt.

Anschließend werden die stabförmigen Artikel auf der Fördertrommel 92 zu einem Übergabebereich zwischen der Fördertrommel 92 und der nachfolgenden Fördertrommel 93 gefördert, so dass im Übergabebereich die stabförmigen Artikel 22 an die Fördertrommel 93 übergeben werden.

Die Fördertrommeln 91, 93 sind jeweils mit Trommelkörpern ausgebildet, die unveränderbare Aufnahmemulden für die stabförmigen Artikel 21, 22 unabhängig von der Größe der zu fördernden stabförmigen Artikel 21, 22 aufweisen. Hierbei weisen die Fördertrommeln 91, 93 einen konstanten Teilungsabstand zwischen den Muldenmittenachsen der Aufnahmemulden auf.

Um bei einem Produktwechsel an der Filteransetzmaschine im Durchmesser unterschiedliche stabförmige Artikel auf den Fördertrommeln 91, 92, 93 zu fördern, wobei bei der Übergabe der stabförmigen Artikel 21, 22 unabhängig von dem Durchmesser eine schonende Übergabe zwischen den Fördertrommeln ermöglicht wird, werden die verschwenkbaren Ärmchen 94 der Fördertrommel 92 unter Verwendung einer hier nicht dargestellten Schwenkkulisse verschwenkt, wobei die durch die Schwenkkulisse die Muldenmittenachsen der Aufnahmemulden der Ärmchen 94 eine elliptische Bewegungsbahn während eines kompletten Umlaufs der Fördertrommel 92 ausführen.

Die in ihrer Form nicht veränderbare Schwenkkulisse für die Schwenkbewegung der Ärmchen 94 wird in Abhängigkeit des Durchmessers der zu fördernden stabförmigen Artikel 21, 22 eingestellt. Beispielsweise wird die Schwenkkulisse durch eine Kurvenscheibe ausgebildet, wobei durch Verdrehen der Schwenkkulisse bzw. der Kurvenscheibe die Position der Aufnahmemulden der Ärmchen 94 in Abhängigkeit der Durchmesser der zu fördernden stabförmigen Artikel 21, 22 eingestellt wird. Hierbei kann das Verstellen der Kurvenscheibe bzw. der Schwenkkulisse manuell oder durch eine Antriebseinrichtung erfolgen.

Aufgrund der Verstellung der Schwenkkulisse werden die im Beispiel gemäß Fig. 8a auf der Fördertrommel 92 geförderten stabförmigen Artikel 22 mit einem kleineren Durchmesser mit ihren Mittenlängsachsen entlang einer elliptischen Bahn gefördert, wobei die Aufnahmemulden der verschwenkbaren Ärmchen 94 während eines kompletten Umlaufs mit ihren Muldenmittenachsen entlang einer elliptischen Bahn aufgrund der mit den Ärmchen 94 zusammenwirkenden Schwenkkulisse bewegt werden.

Werden für einen Produktwechsel an der Filteransetzmaschine F im Durchmesser größere stabförmige Artikel 21 (vgl. Fig. 8b) gefördert, wird die Schwenkkulisse bzw. die Kurvenscheibe an der Fördertrommel 92 in ihrer relativen Position in Bezug auf die zu verschwenkenden Ärmchen 94 verändert, so dass die elliptische Bahn für die Muldenmittenachsen der Ärmchen 94 gegenüber der elliptischen Bahn bei der Förderung von im Durchmesser kleineren stabförmigen Artikel 21 um einen vorbestimmten Winkel verdreht ist, so dass die Mittenlängsachsen der stabförmigen Artikel 22 mit einem größeren Durchmesser ebenfalls entlang einer elliptischen Bahn bewegt werden, wobei die elliptische Kurvenbahn sich von der Kurvenbahn bei Förderung von stabförmigen Artikeln mit einem kleineren Durchmesser in ihrer Lage unterscheidet.

### Bezugszeichenliste

- 21: stabförmiger Artikel
- 22: stabförmiger Artikel
- 23: Mittenlängsachse
- 24: Mittenlängsachse
- 31: Fördertrommel
- 32: Fördertrommel
- 33: Fördertrommel
- 34: Trommelkörper
- 35: Muldenträgerkörper
- 36: Muldenträgerkörper
- 37: Muldenträgerkörper
- 38: Übergabebereich
- 39: Übergabebereich
- 41: Rotationsachse
- 42: Rotationsachse
- 43: Rotationsachse
- 45: Aufnahmemulde
- 46: Saugbohrung
- 50: Zuführeinrichtung
- 51: Förderkanal
- 61: Verstellkörper
- 62: Verstellkörper
- 63: Verstellschraube
- 64: Feder
- 71: Fördertrommel
- 72: Rotationsachse
- 73: Auflagestifte
- 74: Auflagestifte
- 75: Schwenkachse
- 76: Schwenkachse
- 81: Fördertrommel
- 83: Trommelkörper
- 84: Muldenformkörper
- 85: Muldenformkörper
- 86: Aufnahmemulde
- 91: Fördertrommel
- 92: Fördertrommel
- 93: Fördertrommel
- 94: Ärmchen
- 100: Filtermagazin
- 101: Einlass
- 110: Belagapparat
- 111: Belagpapierstreifen
- 112: Saugwalze
- 113: Messerwalze
- 114: Entnahmetrommel
- 115: Spreiztrommel
- 116: Staffeltrommel
- 117: Einlegetrommel
- 118: Übernahmetrommel
- 119: Schneidtrommel
- 120: Spreiztrommel
- 121: Zusammenstelltrommel
- 122: Fördertrommel
- 126: Rolltrommel
- 127: Rolleinrichtung
- 128: Fördertrommel
- 129: Schneidtrommel
- 132: Schneidmesser
- 133: Spreiztrommel
- 134: Prüftrommel
- 135: Prüftrommel
- 136: Fördertrommel
- 137: Entnahmetrommel
- 138: Wendetrommel
- 139: Wendeeinrichtung
- 140: Fördertrommel
- 141: Abgabetrommel
- 144: Prüforgan
- 145: Prüforgan
- 211: Tabakstockzufuhreinrichtung
- 212: Filterzufuhreinrichtung
- 213: Belagpapierzufuhreinrichtung
- 214: Zigarettenherstelleinrichtung
- 215: Zigarettenprüfeinrichtung
- 216: Zigarettenabgabeeinrichtung

- F: Filteransetzmaschine
- M: Trommelanordnung (Filterstopfen)
- P: Zigarettenstrangmaschine
- T: Trommelanordnung (Tabakstöcke)
- KB: Kreisbahn

## Patentansprüche

1. Verfahren zum Fördern von stabförmigen Artikeln (21, 22) der Tabak verarbeitenden Industrie, insbesondere Filterzigaretten oder deren stabförmige Komponenten, wobei die stabförmigen Artikel (21, 22) in Aufnahmemulden von Fördertrommeln (31, 32, 33) unter Rotation der Fördertrommeln (31, 32, 33) queraxial gefördert werden, wobei die um jeweils eine eigene Rotationsachse rotierenden oder rotierbaren Fördertrommeln (31, 32, 33) in queraxialer Förderrichtung der stabförmigen Artikel (21, 22) hintereinander angeordnet sind, wobei die in wenigstens einer Reihe queraxial hintereinander angeordneten stabförmigen Artikel (21, 22) von einer Fördertrommel (31, 32, 33) an eine nachfolgende Fördertrommel (31, 32, 33) übergeben werden, wobei bei einem Wechsel der zu fördernden stabförmigen Artikel (21) von stabförmigen Artikeln einer ersten Art mit einem vorbestimmten Durchmesser zu stabförmigen Artikeln (22) einer zweiten Art mit einem vorbestimmten Durchmesser, wobei der Durchmesser der Artikel (21) der ersten Art und der Durchmesser der Artikel (22) der zweiten Art sich voneinander unterscheiden, der Teilungsabstand der Aufnahmemulden wenigstens einer Fördertrommel (31, 32, 33) in Abhängigkeit der zu fördernden stabförmigen Artikeln derart geändert wird, dass der Abstand mindestens einer Anlagefläche der Aufnahmemulden der Fördertrommel (31, 32, 33) zur Rotationsachse der Fördertrommeln (31, 32, 33) für die stabförmigen Artikel (21, 22) der ersten Art und der Abstand derselben Anlagefläche derselben Aufnahmemulden der Fördertrommel (31, 32, 33) zur Rotationsachse der Fördertrommeln (31, 32, 33) für die Artikel (22) der zweiten Art unterschiedlich sind, **dadurch gekennzeichnet, dass** die Position der Aufnahmemulden der Fördertrommeln (31, 32, 33) durch Verschiebung der Aufnahmemulden in radialer Richtung bezogen auf die Rotationsachse der Fördertrommeln (31, 32, 33) verändert wird.

2. Verfahren nach Anspruch 1, **dadurch gekennzeichnet, dass** der Teilungsabstand der Aufnahmemulden wenigstens einer Fördertrommel (31, 32, 33) durch die Variation der Position der Aufnahmemulden an der Außenseite der Fördertrommel (31, 32, 33, 71, 81) geändert wird.

3. Verfahren nach Anspruch 1 oder 2, **dadurch gekennzeichnet, dass** bei zwei in Förderrichtung der stabförmigen Artikel benachbarten Fördertrommeln (31, 32, 33) für die Förderung von stabförmigen Artikeln (21, 22) im Übergabebereich der stabförmigen Artikel (21, 22) von der einen Fördertrommel (31, 32, 33) auf die nachfolgende Fördertrommel (31, 32, der Kreisbogen der Mittenlängsachsen der stabförmigen Artikel (21, 22), die auf der Artikel abgebenden Fördertrommel (31, 32, 33) gefördert werden, und der Kreisbogen der Mittenlängsachsen der stabförmigen Artikel (21, 22), die auf der Artikel aufnehmenden Fördertrommel (31, 32, 33) gefördert werden, sich berühren.

4. Verfahren nach einem der Ansprüche 1 bis 3, **dadurch gekennzeichnet, dass** bei zwei in Förderrichtung der stabförmigen Artikel benachbarten Fördertrommeln (31, 32, 33) für die Förderung von stabförmigen Artikeln (21) der ersten Art die Position der Aufnahmemulden beider Fördertrommeln (31, 32, 33) derart eingestellt wird, dass im Übergabebereich der stabförmigen Artikel (21, 22) von der einen Fördertrommel (31, 32, 33) auf die nachfolgende Fördertrommel (31, 32, 33) der Kreisbogen der Mittenlängsachsen der stabförmigen Artikel (21) der ersten Art, die auf der Artikel (21, 22) abgebenden Fördertrommel (31, 32, 33) gefördert werden, und der Kreisbogen der Mittenlängsachsen der stabförmigen Artikel (21) der ersten Art, die auf der Artikel aufnehmenden Fördertrommel gefördert werden, sich berühren und nach einem Wechsel der zu fördernden stabförmigen Artikel mit einem anderen Durchmesser für die Förderung der stabförmigen Artikel (22) der zweiten Art die Position der Aufnahmemulden beider Fördertrommeln (31, 32, 33) derart eingestellt sind, dass im Übergabebereich der stabförmigen Artikel (21, 22) von der einen Fördertrommel (31, 32, 33) auf die nachfolgende Fördertrommel (31, 32, 33) der Kreisbogen der Mittenlängsachsen der stabförmigen Artikel (22) der zweiten Art, die auf der Artikel abgebenden Fördertrommel (31, 32, 33) gefördert werden, und der Kreisbogen der Mittenlängsachsen der stabförmigen Artikel (22) der zweiten Art, die auf der Artikel aufnehmenden Fördertrommel (31, 32, 33) gefördert werden, sich berühren.

5. Verfahren nach einem der Ansprüche 1 bis 4, **dadurch gekennzeichnet, dass** bei Aufnahme von stabförmigen Artikeln (21) der ersten Art in den Aufnahmemulden der wenigstens einen Fördertrommel (31, 32, 33) der Kreisbogen der Mittenlängsachsen der stabförmigen Artikel (21) der ersten Art dem Kreisbogen der Mittenlängsachsen der stabförmigen Artikel (22) der zweiten Art bei Aufnahme von stabförmigen Artikeln (22) der zweiten Art in den Aufnahmemulden der wenigstens einen Fördertrommel (31, 32, 33) entspricht.

6. Verfahren nach einem der Ansprüche 1 bis 5, **dadurch gekennzeichnet, dass** die Positionen der Rotationsachsen der Fördertrommeln (31, 32, 33) bei Förderung der stabförmigen Artikel (21) der ersten Art und bei Förderung der stabförmigen Artikel (22) der zweiten Art unverändert bleiben.

7. Verfahren nach einem der Ansprüche 1 bis 6, **dadurch gekennzeichnet, dass** die für die Förderung der stabförmigen Artikel (21, 22) vorgesehenen Fördertrommeln (31, 32, 33) beibehalten werden.

8. Anordnung zum Fördern von stabförmigen Artikeln (21, 22) der Tabak verarbeitenden Industrie, insbesondere Filterzigaretten oder deren stabförmige Komponenten, mit mehreren, um jeweils eine eigene Rotationsachse rotierenden oder rotierbaren Fördertrommeln (31, 32, 33) zur queraxialen Förderung von stabförmigen Artikeln (21, 22) der Tabak verarbeitenden Industrie, wobei die Fördertrommeln (31, 32, 33) in queraxialer Förderrichtung der stabförmigen Artikel hintereinander angeordnet sind, wobei die Fördertrommeln (31, 32, 33) zur Aufnahme von stabförmigen Artikeln (21, 22) jeweils mit Aufnahmemulden mit einer Muldenkontur ausgebildet sind, wobei für einen Wechsel der zu fördernden stabförmigen Artikel (21, 22) von stabförmigen Artikeln (21) einer ersten Art mit einem vorbestimmten Durchmesser zu stabförmigen Artikeln (22) einer zweiten Art mit einem vorbestimmten Durchmesser, wobei der Durchmesser der Artikel (21) der ersten Art und der Durchmesser der Artikel (22) der zweiten Art sich voneinander unterscheiden, der Teilungsabstand der Aufnahmemulden wenigstens einer Fördertrommel (31, 32, 33) in Abhängigkeit der zu fördernden stabförmigen Artikel (21, 22) veränderbar ist, so dass der Abstand mindestens einer Anlagefläche der Aufnahmemulden der Fördertrommel (31, 32, 33) zur Rotationsachse der Fördertrommeln (31, 32, 33) für die stabförmigen Artikel (21) der ersten Art und der Abstand derselben Anlagefläche derselben Aufnahmemulden der Fördertrommel (31, 32, 33) zur Rotationsachse der Fördertrommeln (31, 32, 33) für die Artikel (22) der zweiten Art unterschiedlich sind, **dadurch gekennzeichnet, dass** die Aufnahmemulden der wenigstens einen Fördertrommel (31, 32, 33) in radialer Richtung bewegbar ausgebildet sind.

9. Anordnung nach Anspruch 8, **dadurch gekennzeichnet, dass** die Aufnahmemulden der wenigstens einen Fördertrommel (31, 32, 33) jeweils für die Aufnahme von stabförmigen Artikeln (21, 22) wenigstens eine bewegbare Muldenanlagefläche aufweisen, so dass durch die Bewegung der wenigstens einen Muldenanlagefläche der Teilungsabstand der Aufnahmemulden der Fördertrommel (31, 32, 33) durch die Variation der Position der Aufnahmemulden an der Außenseite der Fördertrommel (31, 32, 33) verändert ist.

10. Anordnung nach einem der Ansprüche 8 oder 9, **dadurch gekennzeichnet, dass** bei zwei in Förderrichtung der stabförmigen Artikel benachbarten Fördertrommeln (31, 32, 33) für die Förderung von stabförmigen Artikeln (21) der ersten Art im Übergabebereich der stabförmigen Artikel (21, 22) von der einen Fördertrommel (31, 32, 33) auf die nachfolgende Fördertrommel (31, 32, 33) der Kreisbogen der Mittenlängsachsen der stabförmigen Artikel (21, 22), die auf der Artikel abgebenden Fördertrommel (31, 32, 33) gefördert werden, und der Kreisbogen der Mittenlängsachsen der stabförmigen Artikel (21, 22), die auf der Artikel aufnehmenden Fördertrommel (31, 32, 33) gefördert werden, sich berühren
und/oder dass bei Aufnahme von stabförmigen Artikeln (21) der ersten Art in den Aufnahmemulden der wenigstens einen Fördertrommel (31, 32, 33) der Kreisbogen der Mittenlängsachsen der stabförmigen Artikel (21) der ersten Art dem Kreisbogen der Mittenlängsachsen der stabförmigen Artikel (22) der zweiten Art bei Aufnahme von stabförmigen Artikeln (22) der zweiten Art in den Aufnahmemulden der wenigstens einen Fördertrommel (31, 32, 33) entspricht.

11. Maschine der Tabak verarbeitenden Industrie, insbesondere Filteransetzmaschine (F), zur Herstellung von stabförmigen Artikeln der Tabak verarbeitenden Industrie, insbesondere Filterzigaretten, mit einer Anordnung nach einem der Ansprüche 8 bis 10.

## Claims

1. A method for conveying rod-shaped articles (21, 22) of the tobacco-processing industry, in particular filter cigarettes or the rod-shaped components thereof, wherein the rod-shaped articles (21, 22) are conveyed transversely to the axis in receiving troughs of conveying drums (31, 32, 33) as the conveying drums (31, 32, 33) rotate, wherein the conveying drums (31, 32, 33) which rotate or can rotate in each case about an own axis of rotation are arranged behind one another in the transverse axial conveying direction of the rod-shaped articles (21, 22), wherein the rod-shaped articles (21, 22) arranged behind one another in at least one row transversely to the axis are transferred from a conveying drum (31, 32, 33) to a subsequent conveying drum (31, 32, 33), wherein in the event of a change of the rod-shaped articles (21) which are to be conveyed from rod-shaped articles of a first type having a predetermined diameter to rod-shaped articles (22) of a second type having a predetermined diameter, wherein the diameter of the articles (21) of the first type and the diameter of the articles (22) of the second type differ from one another, the pitch spacing of the receiving troughs of at least one conveying drum (31, 32, 33) is altered as a function of the rod-shaped articles which are to be conveyed in such a manner that the spacing between at least one contact surface of the receiving troughs of the conveying drum (31, 32, 33) and the axis of rotation of the conveying drums (31, 32, 33) for the rod-shaped articles (21, 22) of the first type and the spacing between the same contact surface of the same receiving troughs of the conveying drum (31, 32, 33) and the axis of rotation of the conveying drums (31, 32, 33) for the articles (22) of the second type are different, **characterized in that** the position of the receiving troughs of the conveying drums (31, 32, 33) is modified by displacing the receiving troughs in the radial direction based on the axis of rotation of the conveying drums (31, 32, 33).

2. The method according to Claim 1, **characterized in that** the pitch spacing of the receiving troughs of at least one conveying drum (31, 32, 33) is altered by varying the position of the receiving troughs on the outer side of the conveying drum (31, 32, 33, 71, 81).

3. The method according to Claim 1 or 2, **characterized in that** if there are two adjacent conveying drums (31, 32, 33) in the conveying direction of the rod-shaped articles for conveying rod-shaped articles (21, 22) in the transfer region of the rod-shaped articles (21, 22) from the one conveying drum (31, 32, 33) to the subsequent conveying drum (31, 32, 33), the circular arc of the central longitudinal axes of the rod-shaped articles (21, 22), which are conveyed on the conveying drum (31, 32, 33) delivering articles, and the circular arc of the central longitudinal axes of the rod-shaped articles (21, 22), which are conveyed on the conveying drum (31, 32, 33) receiving articles, touch one another.

4. The method according to any one of Claims 1 to 3, **characterized in that** if there are two adjacent conveying drums (31, 32, 33) in the conveying direction of the rod-shaped articles for conveying rod-shaped articles (21) of the first type, the position of the receiving troughs of both conveying drums (31, 32, 33) is adjusted in such a manner that in the transfer region of the rod-shaped articles (21, 22) from the one conveying drum (31, 32, 33) to the subsequent conveying drum (31, 32, 33), the circular arc of the central longitudinal axes of the rod-shaped articles (21) of the first type, which are conveyed on the conveying drum (31, 32, 33) delivering articles (21, 22), and the circular arc of the central longitudinal axes of the rod-shaped articles (21) of the first type, which are conveyed on the conveying drum receiving articles, touch one another and following a change of the rod-shaped articles which are to be conveyed having another diameter for conveying the rod-shaped articles (22) of the second type, the position of the receiving troughs of both conveying drums (31, 32, 33) is adjusted in such a manner that in the transfer region of the rod-shaped articles (21, 22) from the one conveying drum (31, 32, 33) to the subsequent conveying drum (31, 32, 33), the circular arc of the central longitudinal axes of the rod-shaped articles (22) of the second type, which are conveyed on the conveying drum (31, 32, 33) delivering articles, and the circular arc of the central longitudinal axes of the rod-shaped articles (22) of the second type, which are conveyed on the conveying drum (31, 32, 33) receiving articles, touch one another.

5. The method according to any one of Claims 1 to 4, **characterized in that** when rod-shaped articles (21) of the first type are received in the receiving troughs of the at least one conveying drum (31, 32, 33), the circular arc of the central longitudinal axes of the rod-shaped articles (21) of the first type corresponds to the circular arc of the central longitudinal axes of the rod-shaped articles (22) of the second type when rod-shaped articles (22) of the second type are received in the receiving troughs of the at least one conveying drum (31, 32, 33).

6. The method according to any one of Claims 1 to 5, **characterized in that** the positions of the axes of rotation of the conveying drums (31, 32, 33) remain unaltered during conveyance of the rod-shaped articles (21) of the first type and during conveyance of the rod-shaped articles (22) of the second type.

7. The method according to any one of Claims 1 to 6, **characterized in that** the conveying drums (31, 32, 33) provided for the conveyance of the rod-shaped articles (21, 22) are retained.

8. An arrangement for conveying rod-shaped articles (21, 22) of the tobacco-processing industry, in particular filter cigarettes or the rod-shaped components thereof, having multiple conveying drums (31, 32, 33) which rotate or can rotate in each case about an own axis of rotation in order to convey rod-shaped articles (21, 22) of the tobacco-processing industry transversely to the axis, wherein the conveying drums (31, 32, 33) are arranged behind one another in the conveying direction of the rod-shaped articles transversely to the axis, wherein the conveying drums (31, 32, 33) are each configured to receive rod-shaped articles (21, 22) with receiving troughs having a trough contour, wherein for a change of the rod-shaped articles (21, 22) which are to be conveyed from rod-shaped articles (21) of a first type having a predetermined diameter to rod-shaped articles (22) of a second type having a predetermined diameter, wherein the diameter of the articles (21) of the first type and the diameter of the articles (22) of the second type differ from one another, the pitch spacing of the receiving troughs of at least one conveying drum (31, 32, 33) can be modified as a function of the rod-shaped articles (21, 22) which are to be conveyed such that the spacing between at least one contact surface of the receiving troughs of the conveying drum (31, 32, 33) and the axis of rotation of the conveying drums (31, 32, 33) for the rod-shaped articles (21) of the first type and the spacing between the same contact surface of the same receiving troughs of the conveying drum (31, 32, 33) and the axis of rotation of the conveying drums (31, 32, 33) for the articles (22) of the second type are different, **characterized in that** the receiving troughs of the at least one conveying drum (31, 32, 33) are configured to be movable in the radial direction.

9. The arrangement according to Claim 8, **characterized in that** the receiving troughs of the at least one conveying drum (31, 32, 33) each have at least one movable trough contact surface for receiving rod-shaped articles (21, 22), so that as a result of the movement of the at least one trough contact surface, the pitch spacing of the receiving troughs of the conveying drum (31, 32, 33) is modified by varying the position of the receiving troughs on the outer side of the conveying drum (31, 32, 33).

10. The arrangement according to any one of Claims 8 or 9, **characterized in that** if there are two adjacent conveying drums (31, 32, 33) in the conveying direction of the rod-shaped articles for conveying rod-shaped articles (21) of the first type in the transfer region of the rod-shaped articles (21, 22) from the one conveying drum (31, 32, 33) to the subsequent conveying drum (31, 32, 33), the circular arc of the central longitudinal axes of the rod-shaped articles (21, 22) which are conveyed on the conveying drum (31, 32, 33) delivering articles, and the circular arc of the central longitudinal axes of the rod-shaped articles (21, 22) which are conveyed on the conveying drum (31, 32, 33) receiving articles, touch one another, and/or that when rod-shaped articles (21) of the first type are received in the receiving troughs of the at least one conveying drum (31, 32, 33), the circular arc of the central longitudinal axes of the rod-shaped articles (21) of the first type corresponds to the circular arc of the central longitudinal axes of the rod-shaped articles (22) of the second type when rod-shaped articles (22) of the second type are received in the receiving troughs of the at least one conveying drum (31, 32, 33).

11. A machine of the tobacco-processing industry, in particular a filter attachment machine (F), for producing rod-shaped articles of the tobacco-processing industry, in particular filter cigarettes, having an arrangement according to any one of Claims 8 to 10.

## Revendications

1. Procédé pour transporter des articles (21, 22) en forme de bâtonnet de l'industrie de transformation du tabac, en particulier des cigarettes à filtres ou des composants en forme de bâtonnet de celles-ci, les articles (21, 22) en forme de bâtonnet étant transportés transversalement à leurs axes dans des gouttières de réception de tambours de transport (31, 32, 33) sous l'effet de la rotation des tambours de transport (31, 32, 33), les tambours de transport (31, 32, 33), tournant ou étant aptes à tourner autour de leur propre axe de rotation, étant disposés les uns derrière les autres dans le sens de transport transversale à l'axe des articles (21, 22) en forme de bâtonnet, les articles (21, 22) en forme de bâtonnet, disposés les uns derrière les autres de façon transversale à l'axe en au moins une rangée étant transférés d'un tambour de transport (31, 32, 33) sur un tambour de transport (31, 32, 33) subséquent, les articles en forme de bâtonnet qui doivent être transportés passant d'articles en forme de bâtonnet (21) d'un premier type ayant un diamètre prédéterminé à des articles en forme de bâtonnet (22) d'un deuxième type ayant un diamètre prédéterminé, le diamètre des articles (21) du premier type et le diamètre des articles (22) du deuxième type étant différent l'un de l'autre, le pas des gouttières de réception d'au moins un tambour de transport (31, 32, 33) étant modifié en fonction des articles en forme de bâtonnet à transporter de telle sorte que la distance entre au moins une surface de contact des gouttières de réception du tambour de transport (31, 32, 33) et l'axe de rotation des tambours de transport (31, 32, 33) pour les articles (21, 22) en forme de bâtonnet du premier type et la distance entre la même surface de contact des mêmes gouttières de réception des tambours de transport (31, 32, 33) et l'axe de rotation des tambours de transport (31, 32, 33) pour les articles (22) du deuxième type sont différentes, **caractérisé en ce que** la position des gouttières de réception des tambours de transport (31, 32, 33) est modifiée en déplaçant les gouttières de réception dans une direction radiale par rapport à l'axe de rotation des tambours de transport (31, 32, 33).

2. Procédé selon la revendication 1, **caractérisé en ce que** le pas des gouttières de réception d'au moins un tambour de transport (31, 32, 33) est modifié en faisant varier la position des gouttières de réception vers le côté extérieur du tambour de transport (31, 32, 33, 71, 81).

3. Procédé selon la revendication 1 ou la revendication 2, **caractérisé en ce que** dans le cas de deux tambours de transport (31, 32, 33) adjacents dans le sens de transport des articles en forme de bâtonnet, pour le transport des articles (21, 22) en forme de bâtonnet dans la zone de transfert des articles (21, 22) en forme de bâtonnet d'un tambour de transport (31, 32, 33) au tambour de transport (31, 32, 33) suivant, l'arc de cercle des axes longitudinaux centraux des articles (21, 22) en forme de bâtonnet, qui sont transportés sur le tambour de transport de distribution des articles (31, 32, 33), et l'arc de cercle des axes longitudinaux centraux des articles (21, 22) en forme de bâtonnet qui sont transportés sur le tambour de transport de réception d'articles (31, 32, 33) se rejoignent.

4. Procédé selon l'une quelconque des revendications 1 à 3, **caractérisé en ce que** dans le cas de deux tambours de transport (31, 32, 33) adjacents dans le sens de transport des articles en forme de bâtonnet, pour le transport d'articles en forme de bâtonnet (21) du premier type, la position des gouttières de réception des deux tambours de transport (31, 32, 33) est réglée de telle sorte que, dans la zone de transfert des articles (21, 22) en forme de bâtonnet d'un tambour de transport (31, 32, 33) au tambour de transport suivant (31, 32, 33), l'arc de cercle des axes longitudinaux centraux des articles en forme de bâtonnet (21) du premier type, qui sont transportés sur le tambour de transport (31, 32, 33) qui délivre les articles (21, 22), et l'arc de cercle des axes longitudinaux centraux des articles en forme de bâtonnet (21) du premier type, qui sont transportés sur le tambour de transport recevant les articles se rejoignent et, après un changement des articles en forme de bâtonnet à transporter avec un diamètre différent pour le transport des articles en forme de bâtonnet (22) du deuxième type, la position des gouttières de réception des deux tambours de transport (31, 32, 33) est réglée de telle sorte que, dans la zone de transfert des articles (21, 22) en forme de bâtonnet d'un tambour de transport (31, 32, 33) au tambour de transport (31, 32, 33) suivant, l'arc de cercle des axes longitudinaux centraux des articles en forme de bâtonnet (22) du deuxième type, qui sont transportés sur le tambour de transport (31, 32, 33) de déchargement des articles, et l'arc de cercle des axes longitudinaux centraux des articles en forme de bâtonnet (22) du deuxième type qui sont transportés sur le tambour de transport (31, 32, 33) de réception des articles se rejoignent.

5. Procédé selon l'une quelconque des revendications 1 à 4, **caractérisé en ce que** lors de la réception d'articles en forme de bâtonnet (21) du premier type dans les gouttières de réception dudit au moins un tambour de transport (31, 32, 33), l'arc de cercle des axes longitudinaux centraux des articles en forme de bâtonnet (21) du premier type correspond à l'arc de cercle des axes longitudinaux centraux des articles en forme de bâtonnet (22) du deuxième type lorsque des articles en forme de bâtonnet (22) du deuxième type sont reçus dans les gouttières de réception dudit au moins un tambour de transport (31, 32, 33).

6. Procédé selon l'une quelconque des revendications 1 à 5, **caractérisé en ce que** les positions des axes de rotation des tambours de transport (31, 32, 33) restent inchangées lors du transport des articles en forme de bâtonnet (21) du premier type et lors du transport des articles en forme de bâtonnet (22) du deuxième type.

7. Procédé selon l'une quelconque des revendications 1 à 6, **caractérisé en ce que** les tambours de transport (31, 32, 33) prévus pour le transport des articles (21, 22) en forme de bâtonnet sont conservés.

8. Agencement pour transporter des articles (21, 22) en forme de bâtonnet de l'industrie de transformation du tabac, en particulier des cigarettes à filtres ou leurs composants en forme de bâtonnet, avec une pluralité de tambours de transport (31, 32, 33) tournant ou aptes à tourner autour de leur propre axe de rotation pour le transport, transversalement à leur axes, d'articles en forme de bâtonnets (21, 22) de l'industrie de transformation du tabac, les tambours de transport (31, 32, 33) étant disposés les uns après les autres dans le sens de transport transversalement à l'axe des articles en forme de bâtonnet, les tambours de transport (31, 32, 33) pour recevoir des articles (21, 22) en forme de bâtonnet sont formés chacun avec des gouttières de réception ayant un contour de gouttière ; pour un changement des articles (21, 22) en forme de bâtonnet à transporter depuis des articles en forme de bâtonnet (21) d'un premier type ayant un diamètre prédéterminé, en des articles en forme de bâtonnet (22) d'un deuxième type ayant un diamètre prédéterminé, le diamètre des articles (21) du premier type et le diamètre des articles (22) du deuxième type étant différents diffèrent les uns des autres, le pas des gouttières de réception d'au moins un tambour de transport (31, 32, 33) peut être modifié en fonction des articles (21, 22) en forme de bâtonnet à transporter, de sorte que la distance entre au moins une surface de contact des gouttières de réception du tambour de transport (31, 32, 33) et l'axe de rotation des tambours de transport (31, 32, 33) pour les articles en forme de bâtonnet (21) du premier type et à la distance entre la même surface de contact des mêmes gouttières de réception du tambour de transport (31, 32, 33) et l'axe de rotation des tambours de transport (31, 32, 33) pour les articles (22) du deuxième type sont différents, **caractérisé en ce que** les gouttières de réception dudit au moins un tambour de transport (31, 32, 33) sont conçues de façon à être mobiles dans la direction radiale.

9. Agencement selon la revendication 8, **caractérisé en ce que** les gouttières de réception dudit au moins un tambour convoyeur (31, 32, 33) présentent chacune au moins une surface de contact de gouttière qui est mobile pour la réception des articles (21, 22) en forme de bâtonnet, de sorte que, par le mouvement de ladite au moins une surface de contact des gouttières, le pas des gouttières de réception du tambour de transport (31, 32, 33) est modifié en faisant varier la position des gouttières de réception vers le côté extérieur du tambour de transport (31, 32, 33).

10. Agencement selon l'une des revendications 8 ou 9, **caractérisé en ce que** dans le cas de deux tambours de transport (31, 32, 33) adjacents dans le sens de transport des articles en forme de bâtonnet, pour le transport d'articles en forme de bâtonnet (21) du premier type dans la zone de transfert des articles (21, 22) en forme de bâtonnet d'un tambour de transport (31, 32, 33) sur le tambour de transport (31, 32, 33) suivant, l'arc de cercle des axes longitudinaux centraux des articles (21, 22) en forme de bâtonnet, qui sont transportés sur le tambour (31, 32, 33) de distribution d'articles, et l'arc de cercle des axes longitudinaux centraux des articles (21, 22) en forme de bâtonnet, qui sont transportés sur le tambour de transport (31, 32, 33) de réception d'articles, se rejoignent et / ou lorsque des articles en forme de bâtonnet (21) du premier type sont reçus dans les gouttières de réception dudit au moins un tambour de transport (31, 32, 33), l'arc de cercle des axes longitudinaux centraux des articles en forme de bâtonnet (21) du premier type correspondent à l'arc de cercle des axes longitudinaux centraux des articles en forme de bâtonnet (22) du deuxième type lorsque des articles en forme de bâtonnet (22) du deuxième type sont reçus dans les gouttières de réception dudit au moins un tambour de transport (31, 32, 33).

11. Machine de l'industrie du tabac, en particulier machine (F) à fixer les bouts-filtres, pour la fabrication d'articles en forme de bâtonnets de l'industrie de transformation du tabac, en particulier de cigarettes à filtres, comportant un agencement selon l'une des revendications 8 à 10.
